# EUROPEAN PATENT SPECIFICATION

(11) **EP 3 198 662 B1**
(45) Date of publication and mention of the grant of the patent: **13.01.2021**
(21) Application number: 15775577.8
(22) Date of filing: 25.09.2015
(51) Int. Cl.: H01M 2/02, H01M 4/131, H01M 4/38

(54) **HIGH ENERGY DENSITY PRISMATIC BATTERY CELL AND BATTERY MODULE**
PRISMATISCHE BATTERIEZELLE MIT HOHER ENERGIEDICHTE UND BATTERIEMODUL
CELLULE PRISMATIQUE DE BATTERIE À HAUTE DENSITE D'ENERGIE ET MODULE DE BATTERIE

(30) Priority: 26.09.2014 US 201462056376 P; 26.09.2014 US 201462056382 P; 22.04.2015 US 201562151092 P; 24.09.2015 US 201514864396
(43) Date of publication of application: 02.08.2017
(73) Proprietor: CPS Technology Holdings LLC, New York, New York 10281 (US)
(72) Inventor: TYLER, Matthew, R., New York, NY 10021 (US); BOONE, David, R., Waukesha, WI 53186 (US)
(74) Representative: Trinks, Ole
(86) International application number: PCT/US2015/052212
(87) International publication number: WO 2016/049450

(56) References cited:
- EP-A1- 2 325 917
- WO-A1-2013/129182
- DE-A1-102010 011 413
- US-A1- 2009 239 146
- US-A1- 2011 052 981
- US-A1- 2011 076 521
- US-A1- 2014 186 659
- SHMUEL DE LEON: "HIGH POWER RECHARGEABLE LITHIUM CELLS MARKET", IFCBC MEETING 2010 , 4 February 2010 (2010-02-04), pages 1-41, XP002751900, Retrieved from the Internet: URL:http://www.tau.ac.il/institutes/ifcbc/ presentations/DeLeon.pdf [retrieved on 2015-12-08]
- Anonymous: "LITHIUM-ION RECHARGEABLE BATTERY", Maxell , 2 August 2012 (2012-08-02), pages 3-6,51, XP002751802, Retrieved from the Internet: URL:http://biz.maxell.com/files_etc/6/cata log/en/Prismatic%20Li-ion_12e.pdf [retrieved on 2015-12-08]
- Anonymous: "OUR GUIDE TO BATTERIES", JOHNSON MATTHEY BATTERY SYSTEMS , 31 December 2012 (2012-12-31), pages FP-22, XP002751803, Retrieved from the Internet: URL:http://www.jmbatterysystems.com/JMBS/m edia/JMBS/Documents/JMBS-Guide-to-Batterie s.pdf [retrieved on 2015-12-08]
- PAUL NELSON: "ADVANCED LITHIUM ION BATTERIES FOR PLUG-IN HYBRID-ELECTRIC VEHICLES", , 13 September 2012 (2012-09-13), page 18pp, XP002751804, Retrieved from the Internet: URL:https://web.archive.org/web/2012091310 1742/http://www.autonomie.net/docs/6%20-%2 0Papers/HEVs%20&%20PHEVs/Component%20Techn ologies/advanced_lithium-ion_batteries.pdf [retrieved on 2015-12-08]
- STAN ANA-IRINA ET AL: "Lithium ion battery chemistries from renewable energy storage to automotive and back-up power applications - An over", 2014 INTERNATIONAL CONFERENCE ON OPTIMIZATION OF ELECTRICAL AND ELECTRONIC EQUIPMENT (OPTIM), IEEE, 22 May 2014 (2014-05-22), pages 713-720, XP032615727, DOI: 10.1109/OPTIM.2014.6850936 [retrieved on 2014-07-09]

## Description

### BACKGROUND

The present disclosure relates generally to the field of batteries and battery modules. More specifically, the present disclosure relates to battery cell placement within lithium-ion (Li-ion) battery modules.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A vehicle that uses one or more battery systems for providing all or a portion of the motive power for the vehicle can be referred to as an xEV, where the term "xEV" is defined herein to include all of the following vehicles, or any variations or combinations thereof, that use electric power for all or a portion of their vehicular motive force. For example, xEVs include electric vehicles (EVs) that utilize electric power for all motive force. As will be appreciated by those skilled in the art, hybrid electric vehicles (HEVs), also considered xEVs, combine an internal combustion engine propulsion system and a battery-powered electric propulsion system, such as 48 Volt (V) or 130V systems. The term HEV may include any variation of a hybrid electric vehicle. For example, full hybrid systems (FHEVs) may provide motive and other electrical power to the vehicle using one or more electric motors, using only an internal combustion engine, or using both. In contrast, mild hybrid systems (MHEVs) disable the internal combustion engine when the vehicle is idling and utilize a battery system to continue powering the air conditioning unit, radio, or other electronics, as well as to restart the engine when propulsion is desired. The mild hybrid system may also apply some level of power assist, during acceleration for example, to supplement the internal combustion engine. Mild hybrids are typically 96V to 130V and recover braking energy through a belt or crank integrated starter generator. Further, a micro-hybrid electric vehicle (mHEV) also uses a "Stop-Start" system similar to the mild hybrids, but the micro-hybrid systems of a mHEV may or may not supply power assist to the internal combustion engine and operates at a voltage below 60V. For the purposes of the present discussion, it should be noted that mHEVs typically do not technically use electric power provided directly to the crankshaft or transmission for any portion of the motive force of the vehicle, but an mHEV may still be considered as an xEV since it does use electric power to supplement a vehicle's power needs when the vehicle is idling with internal combustion engine disabled and recovers braking energy through an integrated starter generator. In addition, a plug-in electric vehicle (PEV) is any vehicle that can be charged from an external source of electricity, such as wall sockets, and the energy stored in the rechargeable battery packs drives or contributes to drive the wheels. PEVs are a subcategory of EVs that include all-electric or battery electric vehicles (BEVs), plug-in hybrid electric vehicles (PHEVs), and electric vehicle conversions of hybrid electric vehicles and conventional internal combustion engine vehicles.

xEVs as described above may provide a number of advantages as compared to more traditional gas-powered vehicles using only internal combustion engines and traditional electrical systems, which are typically 12V systems powered by a lead acid battery. For example, xEVs may produce fewer undesirable emission products and may exhibit greater fuel efficiency as compared to traditional internal combustion vehicles and, in some cases, such xEVs may eliminate the use of gasoline entirely, as is the case of certain types of EVs or PEVs.

US 2011/052981 A1 relates to conventional compositions of layer-layer lithium rich complex metal oxides with high specific capacity and excellent cycling for lithium ion batteries. The battery comprises a nnegative electrode comprising a graphitic carbon active material, a positive electrode, a separator between the positive electrode and the negative electrode and an electrolyte.

DE 10 2010 011 413 relates to a cathode electrode and an electrochemical cell for dynamic applications. The cathode electrode comprises a carrier and an active material which inludes either at least one lithium-polyanion-compound or a mixture of an NMC, which does not comprise a spinel structure, or a combination or the two, the carrier comprising a metallic material, such as aluminum.

US 2014/186659 A1 relates to a hybrid battery system having an energy requirement and a power requirement. The battery system comprises a first component configured to provide the energy requirement of na application and a second component configured to provide the power requirement of the application.

As technology continues to evolve, there is a need to provide improved power sources, particularly battery modules, for such vehicles and other implementations. For example, certain traditional battery modules may include a plurality of battery cells. In such traditional modules, the battery cells may be subject to swelling during use (e.g., charging and discharging), which can affect their operation and, in some situations, cause the cells to move within the battery module. Elaborate clamping mechanisms are traditionally used to compress the battery cells in position, which provides compression to offset swelling and maintains their position within the modules. Accordingly, it is now recognized that traditional battery modules may be subject to further improvement by, for example, reducing or altogether eliminating the need for such clamping mechanisms. Further, it is also recognized that it may be desirable to reduce or mitigate battery cell swelling.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

The invention is defined by the appended claims.

### DRAWINGS

Various aspects of this disclosure may be better understood upon reading the following detailed description and upon reference to the drawings in which:
FIG. 1 is a perspective view of an xEV having a battery system configured in accordance with present embodiments to provide power for various components of the xEV, in accordance with an aspect of the present disclosure;
FIG. 2 is a cutaway schematic view of an embodiment of the xEV having a start-stop system that utilizes the battery system of FIG. 1, the battery system having a lithium ion battery module, in accordance with an aspect of the present disclosure;
FIG. 3 is a top perspective view of various battery modules illustrating the manner in which a single type of battery cell may be incorporated into different types of lithium ion battery module housings to place a plurality of the battery cells into a floating arrangement, in accordance with an aspect of the present disclosure;
FIG. 4 is a top perspective view of an overlay of lithium ion battery module dimensions corresponding to the lithium ion battery modules of FIG. 3, in accordance with an aspect of the present disclosure;
FIG. 5 is a top perspective view of an overlay of available cell volumes of the lithium ion battery modules of FIG. 3, in accordance with an aspect of the present disclosure;
FIG. 6 is a perspective view of a prismatic battery cell that may be incorporated into the battery modules of FIG. 3, in accordance with an aspect of the present disclosure;
FIG. 7 is a cutaway top perspective view of a plurality of battery cells corresponding to the battery cell of FIG. 6 incorporated into the housing overlay depicted in FIG. 4, in accordance with an aspect of the present disclosure;
FIG. 8 is a top perspective view of a plurality of battery cells placed within a battery module housing and having an expanded view of fixed protrusions producing a floating cell arrangement, in accordance with an aspect of the present disclosure;
FIG. 9 is a cutaway side perspective view of a lithium ion battery module having a plurality of battery cells in a floating arrangement, with the housing removed to depict the relative positioning of the battery cells when in the floating arrangement of FIG. 8, in accordance with an aspect of the present disclosure;
FIG. 10 is a comparative side view of a swellable battery cell and a substantially non-swellable battery cell before and after charging, in accordance with an aspect of the present disclosure;
FIG. 11 is an exploded top perspective view of a lithium ion battery module having battery cells that are urged inwardly against a back of a housing by an integrated bus bar and voltage sense subassembly, in accordance with an aspect of the present disclosure;
FIG. 12 is a cutaway side view of a column of battery cells in the battery module of FIG. 11 taken along line 12-12, and having one or more spacers positioned between the battery cells, in accordance with an aspect of the present disclosure;
FIG. 13 is a block diagram of a manufacturing system configured to pick and place battery cells into a battery module housing without performing battery cell grading, in accordance with an aspect of the present disclosure;
FIG. 14 is a process flow diagram of a method for manufacturing battery modules using the pick and place technique performed by the system of FIG. 13, in accordance with an aspect of the present disclosure;
FIG. 15 is a block diagram of a manufacturing system configured to index a battery module housing, and to place battery cells and other components into the housing in accordance with the indexing, in accordance with an aspect of the present disclosure;
FIG. 16 is a process flow diagram of a method for manufacturing battery modules using the indexing technique performed by the system of FIG. 15, in accordance with an aspect of the present disclosure;
FIG. 17 is a schematic illustration of the indexing technique of FIG. 16, in accordance with an aspect of the present disclosure; and
FIG. 18 is a front view of a partially assembled lithium ion battery module having substantially non-swellable battery cells, the battery cells having different states of charge but substantially the same cell thickness, in accordance with an aspect of the present disclosure.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The battery systems described herein may be used to provide power to various types of electric vehicles (xEVs) and other high voltage energy storage/expending applications (e.g., electrical grid power storage systems). Such battery systems may include one or more battery modules, each battery module having a housing and a number of battery cells (e.g., lithium-ion (Li-ion) battery cells) arranged within the housing to provide particular voltages and/or currents useful to power, for example, one or more components of an xEV. As another example, battery modules in accordance with present embodiments may be incorporated with or provide power to stationary power systems (e.g., non-automotive systems).

Battery cells used in lithium ion battery modules may also be referred to as battery cells, and different types of such battery cells can have different voltages and/or capacities, for example based on the active materials contained within each cell. Generally, lithium ion battery cells will include a cathode (a positive electrode), an anode (a negative electrode), and an electrolyte that provides a source of ions (e.g., lithium ions). In certain configurations, the cathode and anode each include an electrode active material that enables the electrodes to store and transfer ions (e.g., lithium ions) during charging and discharging cycles. Whether the electrode is a cathode or an anode is generally determined by the electrode active material for each and their reference voltages versus Li/Li⁺. Thus, the electrode active materials will generally be different.

As will be appreciated by those of skill in the art, an electrochemical half-reaction occurs at each of the positive and negative electrodes. For example, the electrochemical half-reaction at the positive electrode may be a reaction in which one or more lithium ions are reversibly (based on an equilibrium) dissociated from the positive electrode active material, thereby also releasing one or more electrons (equal in number to the number of dissociated lithium ions). At the negative electrode, the electrochemical half-reaction that occurs may be a reaction in which one or more lithium ions and one or more electrons (of equal number) are reversibly associated with the negative electrode active material (e.g., carbon).

During discharging of the battery, the equilibria at the electrodes favor dissociation of the lithium ions and electrons from the negative electrode active material and re-association of the electrons and lithium ions with the positive electrode active material. On the other hand, during charging, the reverse is true. The movement of the ions into the electrodes is commonly referred to as intercalation or insertion, and the movement of the ions away from the electrodes is commonly referred to as deintercalation or extraction. Accordingly, during discharging, intercalation occurs at the positive electrode and deintercalation occurs at the negative electrode, and during charging, the reverse is true. Therefore, lithium ion battery cells will generally operate based on lithium ion intercalation and deintercalation at its electrodes.

In this regard, a number of properties of the battery cells may stem from a combination of the physical configuration of the cell (e.g., its shape, size, layout), and its chemical configuration (e.g., electrode active materials, electrolytes, additives). For example, in traditional prismatic battery cells that use graphite as an anode active material, a relatively large degree of size change may occur as a result of charge and discharge cycles, where during charging, lithium becomes intercalated into the active material (graphite), causing the anode to swell, while during discharging, the active material releases the lithium, causing the anode to reduce in size. Such swelling can be problematic in that it reduces the power density of the battery cell, and, as the anode swells, this causes resistance between the anode and cathode to occur, which reduces the efficiency of the cell. In traditional approaches, this swelling is somewhat mitigated by way of placing a relatively large degree of compression force onto the prismatic cells, for example at a position corresponding to their active areas where the electrodes (anode and cathode) are located. However, these clamping mechanisms can be bulky and add considerable weight to a particular lithium ion battery module.

For example, actuatable clamping mechanisms such as a clamp attached to the battery module, a movable plate disposed within the battery module housing that may be actuated (e.g., using a crank, a clamp, an adjustable tie and bolt mechanism) to abut against the battery cells, or an adjustable tie and bolt mechanism used to actuate components (e.g., outer or inner walls) of the battery module housing, may be used to compress the battery cells by a particular amount. This may be done to maintain the energy density and performance of the battery cells within a predetermined range. Prismatic battery cells, for example, are traditionally held in place by such actuatable clamping mechanisms that are a part of or integrated with a battery module housing.

In accordance with the present disclosure, it is now recognized that it may be desirable to mitigate, reduce, or altogether eliminate such swelling without having to rely on such bulky and heavy clamping mechanisms. It is also now recognized that the elimination of such traditional clamping mechanisms may enable other lithium ion battery module features. For example, in certain embodiments of the present disclosure, lithium ion battery modules may be designed to have a particular volume for the battery cells, while other portions of the lithium ion battery modules may be used for other module features, such as control and regulation circuitry (e.g., a battery monitoring system (BMS), a battery control module (BCM)), thermal management features (e.g., fans, cooling paths), and so forth. Indeed, reduced swelling and reliance on clamping mechanisms may also enable battery module sizes and designs that may be particularly suitable for certain applications, such as micro-hybrid applications.

With the foregoing in mind, the present disclosure, in one aspect, is directed toward lithium ion battery modules that include a plurality of battery cells (lithium ion battery cells, also referred to herein as electrochemical cells or cells) that remain in a relatively uncompressed state (e.g., without the use of an actuatable or other clamping mechanism). As one non-limiting example, such a configuration may include a floating assembly, which is also referred to herein as a floating arrangement. The floating assembly of the present embodiments may include an arrangement where each battery cell is suspended within a housing of the module by a plurality of fixed protrusions (e.g., two or more), and the fixed protrusions hold the cells along their periphery, such as only along a portion of their periphery. In other embodiments, the battery cells may be secured within the battery module using other mechanisms that do not place a clamping force onto the battery cells before swelling occurs. For instance, the battery cells may be secured to one another and/or some portion of a housing of the battery module.

In certain embodiments, the battery cells may include specific chemistries that enable the cells to be utilized in the present battery modules with little to no swelling. This enables, among other things, an avoidance of certain clamping mechanisms and the introduction of additional module features. In one example, mitigation of battery cell swelling may enable a gap (e.g., an air gap) to be maintained between the cells without clamping features being placed on the active areas of the cells. For example, during normal operation (e.g., charging/discharging maintained within a certain state of charge (SOC) range), the cells described herein may swell to an extent that is greatly reduced or altogether eliminated compared to other battery cells used in traditional lithium-ion battery modules. Such embodiments are described in further detail below.

While the present disclosure includes a number of embodiments that may benefit from the use of certain types of battery cells that have reduced swelling, it should be noted that certain disclosed embodiments may also be applicable to lithium ion battery modules that use a wide variety of cells, including those that swell. In this regard, the description set forth below should not be construed as being limited to certain lithium ion battery cell chemistries, except as otherwise indicated. Indeed, a wide variety of electrode active materials, electrolyte materials, and so forth, may be used in accordance with certain aspects of the present disclosure.

In one aspect, for example the cathode active material and the anode active material of the electrodes in the lithium-ion battery cells may be selected so as to have reduced swelling compared to other combinations of electrode active materials for the anode and cathode. While the electrode active materials may generally be of any type, configuration, or chemistry, according the invention, the cathode active material includes lithium nickel cobalt manganese oxide (NMC, LiNiₓMn_{y}Co_{z}O₂, where x+y+z=1) as a cathode active material. In accordance with certain aspects of the present disclosure, the NMC may be used as the only cathode active material, or the NMC may be combined (e.g., physically blended) with other cathode active materials (e.g., other lithium metal oxides). The anode active material may be any suitable material, but in one particular embodiment is lithium titanate (LTO, e.g., Li₄Ti₅O₁₂). In prismatic battery cells, which are intended to include battery cells having a generally rectangular shape and a hard (e.g., metallic or plastic) outer casing, a combination of these active materials may reduce swelling and associated size variability due to charge and discharge cycling. In this regard, such prismatic battery cells may be particularly useful where the cells may be relied upon for reliable charge and discharge cycles to power automotive equipment, home equipment, and so forth.

For example, in certain xEV contexts (among others, such as non-automotive or stationary energy expending applications), a 12 V output from a lithium ion battery module may be desirable to power certain types of components (e.g., similar types of components traditionally powered by a traditional lead acid battery in traditional vehicles), while a 48 V output may be more suitable to power other types of components that may require a higher voltage, such as an air conditioning system. With this in mind, it is now recognized that the present battery module embodiments may be particularly applicable to such types of battery modules. Indeed, the present approaches may enable the production of lithium ion battery modules that may be designed to fit in different locations of an xEV, or in different locations of a home or other setting.

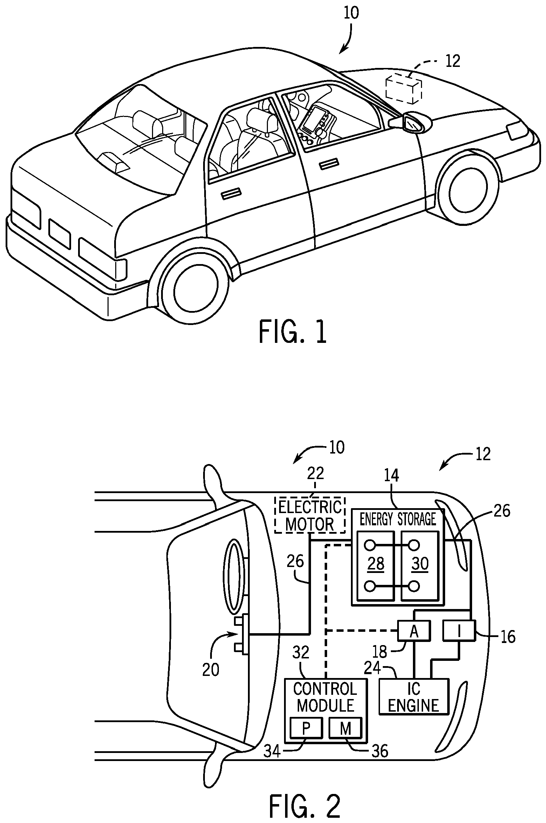

To help illustrate, FIG. 1 is a perspective view of an embodiment of a vehicle 10, which may utilize a regenerative braking system. Although the following discussion is presented in relation to vehicles with regenerative braking systems, the techniques described herein are adaptable to other vehicles that capture/store electrical energy with a battery, which may include electric-powered and gas-powered vehicles, as well as other non-automotive (e.g., stationary) applications.

It is now recognized that it is desirable for a non-traditional battery system 12 (e.g., a lithium ion car battery) to be largely compatible with traditional vehicle designs. In this respect, present embodiments include various types of battery modules for xEVs and systems that include xEVs. Accordingly, the battery system 12 may be placed in a location in the vehicle 10 that would have housed a traditional battery system. For example, as illustrated, the vehicle 10 may include the battery system 12 positioned similarly to a lead-acid battery of a typical combustion-engine vehicle (e.g., under the hood of the vehicle 10). Furthermore, as will be described in more detail below, the battery system 12 may be positioned to facilitate managing temperature of the battery system 12. For example, in some embodiments, positioning a battery system 12 under the hood of the vehicle 10 may enable an air duct to channel airflow over the battery system 12 and cool the battery system 12.

A more detailed view of the battery system 12 is described in FIG. 2. As depicted, the battery system 12 includes an energy storage component 14 coupled to an ignition system 16, an alternator 18, a vehicle console 20, and optionally to an electric motor 22. Generally, the energy storage component 14 may capture/store electrical energy generated in the vehicle 10 and output electrical energy to power electrical devices in the vehicle 10.

In other words, the battery system 12 may supply power to components of the vehicle's electrical system, which may include radiator cooling fans, climate control systems, electric power steering systems, active suspension systems, auto park systems, electric oil pumps, electric super/turbochargers, electric water pumps, heated windscreen/defrosters, window lift motors, vanity lights, tire pressure monitoring systems, sunroof motor controls, power seats, alarm systems, infotainment systems, navigation features, lane departure warning systems, electric parking brakes, external lights, or any combination thereof. Illustratively, in the depicted embodiment, the energy storage component 14 supplies power to the vehicle console 20 and the ignition system 16, which may be used to start (e.g., crank) the internal combustion engine 24.

Additionally, the energy storage component 14 may capture electrical energy generated by the alternator 18 and/or the electric motor 22. In some embodiments, the alternator 18 may generate electrical energy while the internal combustion engine 24 is running. More specifically, the alternator 18 may convert the mechanical energy produced by the rotation of the internal combustion engine 24 into electrical energy. Additionally or alternatively, when the vehicle 10 includes an electric motor 22, the electric motor 22 may generate electrical energy by converting mechanical energy produced by the movement of the vehicle 10 (e.g., rotation of the wheels) into electrical energy. Thus, in some embodiments, the energy storage component 14 may capture electrical energy generated by the alternator 18 and/or the electric motor 22 during regenerative braking. As such, the alternator and/or the electric motor 22 are generally referred to herein as a regenerative braking system.

To facilitate capturing and supplying electric energy, the energy storage component 14 may be electrically coupled to the vehicle's electric system via a bus 26. For example, the bus 26 may enable the energy storage component 14 to receive electrical energy generated by the alternator 18 and/or the electric motor 22. Additionally, the bus may enable the energy storage component 14 to output electrical energy to the ignition system 16 and/or the vehicle console 20. Accordingly, when a 12 volt battery system 12 is used, the bus 26 may carry electrical power typically between 8-18 volts.

Additionally, as depicted, the energy storage component 14 may include multiple battery modules. For example, in the depicted embodiment, the energy storage component 14 includes a lithium ion (e.g., a first) battery module 28 and a lead-acid (e.g., a second) battery module 30, which each includes one or more battery cells. In other embodiments, the energy storage component 14 may include any number of battery modules. Additionally, although the lithium ion battery module 28 and lead-acid battery module 30 are depicted adjacent to one another, they may be positioned in different areas around the vehicle. For example, the lead-acid battery module 30 may be positioned in or about the interior of the vehicle 10 while the lithium ion battery module 28 may be positioned under the hood of the vehicle 10.

In some embodiments, the energy storage component 14 may include multiple battery modules to utilize multiple different battery chemistries. For example, when the lithium ion battery module 28 is used, performance of the battery system 12 may be improved since the lithium ion battery chemistry generally has a higher coulombic efficiency and/or a higher power charge acceptance rate (e.g., higher maximum charge current or charge voltage) than the lead-acid battery chemistry. As such, the capture, storage, and/or distribution efficiency of the battery system 12 may be improved.

To facilitate controlling the capturing and storing of electrical energy, the battery system 12 may additionally include a control module 32. More specifically, the control module 32 may control operations of components in the battery system 12, such as relays (e.g., switches) within energy storage component 14, the alternator 18, and/or the electric motor 22. For example, the control module 32 may regulate amount of electrical energy captured/supplied by each battery module 28 or 30 (e.g., to de-rate and re-rate the battery system 12), perform load balancing between the battery modules 28 and 30, determine a state of charge of each battery module 28 or 30, determine temperature of each battery module 28 or 30, control voltage output by the alternator 18 and/or the electric motor 22, and the like.

Accordingly, the control unit 32 may include one or more processors 34 and one or more memory units 36. More specifically, the one or more processor 34 may include one or more application specific integrated circuits (ASICs), one or more field programmable gate arrays (FPGAs), one or more general purpose processors, or any combination thereof. Additionally, the one or more memory 36 may include volatile memory, such as random access memory (RAM), and/or non-volatile memory, such as read-only memory (ROM), optical drives, hard disc drives, or solid-state drives. In some embodiments, the control unit 32 may include portions of a vehicle control unit (VCU) and/or a separate battery control module. Furthermore, as depicted, the lithium ion battery module 28 and the lead-acid battery module 30 are connected in parallel across their terminals. In other words, the lithium ion battery module 28 and the lead-acid module 30 may be coupled in parallel to the vehicle's electrical system via the bus 26.

As set forth above, in one aspect of the present approach, the lithium ion battery module 28 may be sized to fit in particular portions of the xEV 10, including under the hood, under a passenger compartment, in a trunk, etc. Further, in another aspect, a plurality of different types of the lithium ion battery module 28 produced in accordance with the present approach may be designed to have a common footprint by designing a volume to be occupied by the battery cells, or the volume available to the battery cells, to have a constant length and width, and differ in the height direction depending on the number of cells in the module. In addition, the design of the volume in the module 28 for the cells may include various other features, such as air gaps, to enable certain types of passive and/or active cooling.

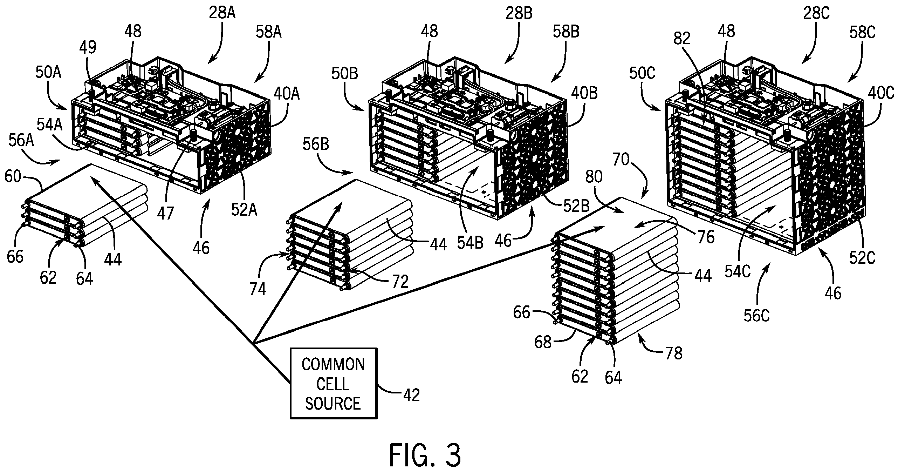

In accordance with one aspect of the present disclosure, different types of the lithium ion battery module 28 may utilize a particular type of prismatic battery cells, as shown in FIG. 3. Specifically, as shown, a first lithium ion battery module 28A, a second lithium ion battery module 28B, and a third lithium ion battery module 28C each have a respective housing 40A-40C, and all use a common source 42 of prismatic battery cells 44. That is, prismatic battery cells 44 conforming to a particular set of manufacturing specifications (e.g., standardized dimensions with standard tolerances, constructions, and chemistries) may be used in any of the illustrated lithium ion battery modules 28. As also shown, each of the lithium ion battery modules 28 includes substantially the same layout of the battery cells 44 in their housings 44, with the difference being in total number only.

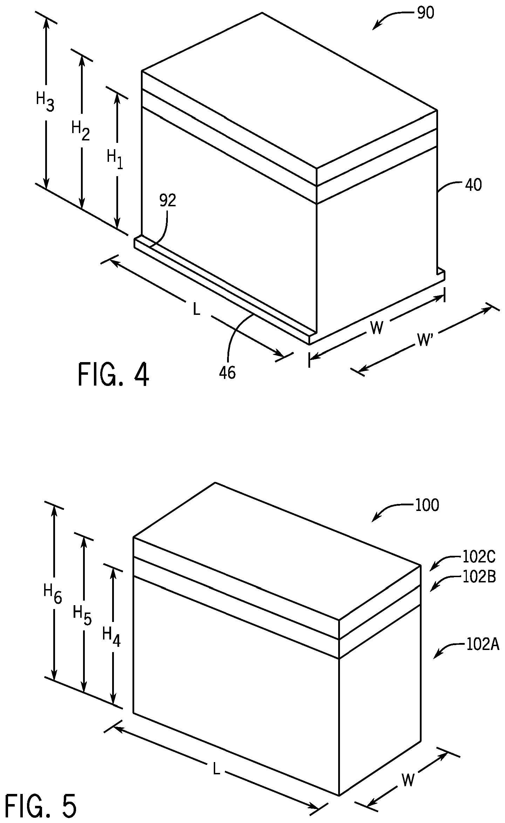

For example, in FIG. 3, the first lithium ion battery module 28A may have a first output voltage (e.g., 12 V) and a first capacity (e.g., 10 amp hours (Ah)), and the second lithium ion battery module 28B may have a second output voltage that is the same as the first output voltage while having a second capacity greater than the first capacity (e.g., 20Ah), depending on the electrical interconnection of the battery cells 44. From a power component standpoint, the second lithium ion battery module 28B differs from the first lithium ion battery module 28A by the number of total battery cells 44 in their respective housings 40. In one embodiment, the first lithium ion battery module 28A may include a first number (e.g., 6) of battery cells electrically coupled in a serial arrangement, while the second lithium ion battery module 28B, which has a larger capacity (e.g., twice the capacity), has a second number (e.g., 12) of the same type of battery cells coupled using a combination of serial and parallel electrical connections. The arrangement of the battery cells 44 within the housings 40, as well as their respective sizes, as described in further detail below, are the primary factors that control a respective height H₁ (shown in FIG. 4) of the lithium ion battery module 28A and a respective height H₂ (shown in FIG. 4) of the lithium ion battery module 28B. The third lithium ion battery module 28C has a significantly larger height H₃ (shown in FIG. 4) compared to the first and second lithium ion battery modules 28A, 28B. This is due, at least in part, to the additional number of battery cells 44 required for the lithium ion battery module 28 to reach a higher voltage (e.g., 48 V using a third number, such as 20, of the same type of battery cells connected in series).

The housings 40, which may be sized to fit the particular number of battery cells 44 required to reach the desired voltage and capacity, may each be a one-piece housing or a multi-piece housing (e.g., two-piece, three-piece, or more). To facilitate discussion, different sections of the housing 40 (which generally correspond to sections of the overall lithium ion battery module 28) are defined herein as follows: a base 46, which may also be referred to as a bottom portion and generally defines the footprint of the lithium ion battery module 28 when placed in operation (e.g., in the xEV 10). A top portion 48 of the lithium ion battery module 28 is positioned opposite the base 46, and the top portion 48 and the base 46 may be considered, if rested on a flat surface, to be oriented perpendicularly relative to gravity (i.e., Earth gravity), and the top portion 48 generally includes terminals 47, 49 for the battery module 28 (as shown on module 28A). However, it should be noted that these portions of the housing 40 may still be referred to as the base 46 and the top portion 48, even if the battery module 28 were to be set in a different orientation (i.e., the base 46 and the top portion 48 will not always be perpendicular to gravity, such as when placed on another side). The dimensions of the base 46 may be considered to constitute the length (L) and width (W) of the module 28, which is described in further detail below.

The housings 40 also include left sides 50A-50C and right sides 52A-52C, which may be different due to the differences in height of the different lithium ion battery modules 28, which is also described in further detail below. The sides generally extend between the base 46 and the top portion 48. The left sides 50A-50C and right sides 52A-52C are determined, in the illustrated embodiment, with reference to a cell receptacle region 54A-54C for each of the modules 28. The cell receptacle regions 54A-54C may be considered to have an opening corresponding to a front end 56A-56C for each lithium ion battery module 28. A back end 58A-58C of each module 28 is positioned opposite the front end 56. In certain battery module configurations, the lithium ion battery modules 28 may be placed in operation in an orientation where the back end 58A-58C and front end 56A-56C serve as the base and the top, respectively, of the module 28. In other words, the depicted orientations of the battery modules 28 may be considered to represent horizontal orientations where the modules 28 are resting on their bases 52A-52C, but a vertical orientation may be one in which the modules 28 are flipped 90° and rest on their back ends 58A-58C. In such a vertical configuration, the back ends 58A-58C and the front ends 56A-56C would be oriented perpendicular relative to gravity rather than parallel with gravity as shown.

The cell receptacle region 54, as shown, is configured to receive a plurality of battery cells (e.g., prismatic battery cells) in a particular orientation. For instance, in accordance with the present disclosure, the battery cells 44 each have a prismatic casing 60. The prismatic casings 60 are subject to, and may conform to, a set of manufacturing specifications, including their size in all dimensions, a location of certain features (e.g., vents, terminals), and so forth. To facilitate discussion, the layout of each prismatic battery cell 44 is defined herein as follows: the prismatic casings 60, which are of a generally hard material (e.g., metal or hard plastic), each include a generally rectangular shape, which may include one or more rounded sides and/or beveled edges. In the illustrated embodiment, the prismatic battery cells 44 include a top casing portion, referred to herein as a terminal end 62, where a set of cell terminals 64, 66 (e.g., positive and negative cell terminals) are located. One or more cell vents 68 may also be located on the terminal end 62. The set of cell terminals 64, 66 for each of the battery cells 44 enables the cells to be electrically connected to various electrical components, including other cells, to the terminals 49 of the lithium ion battery module 28, and a load to which the lithium ion battery module 28 may be coupled. The cell vents 68 are configured to enable venting of gases under certain conditions.

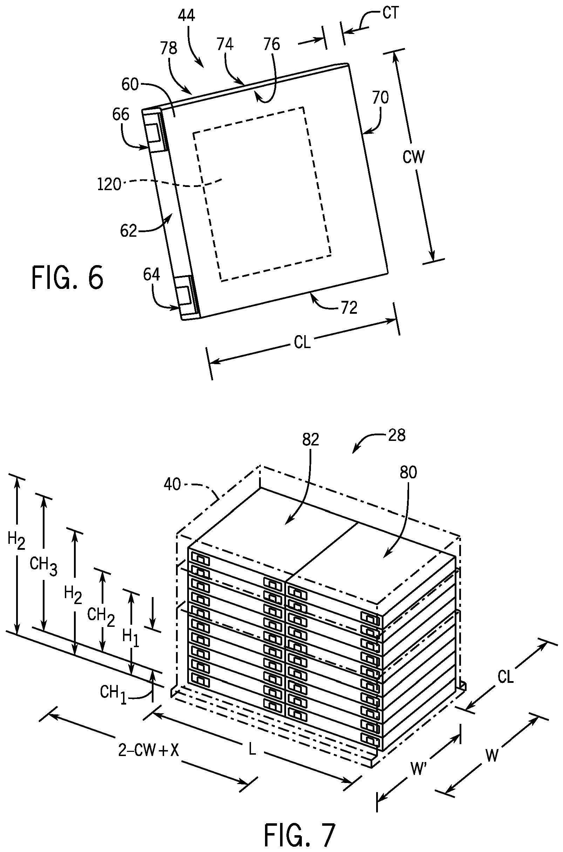

The prismatic cell casings 60 also include a bottom casing portion 70, referred to herein as a base casing portion 70, positioned opposite the terminal end 62 and, as shown, the base casing portion 70 may be placed into the housing 40 first, such that the cell terminals 64, 66 point outwardly from the cell receptacle region 54 in the same direction. First and second sides 72, 74 (e.g., flat, rounded, or beveled sides) extend between the bottom and top casing portions 62, 70 in respective positions corresponding to the cell terminals 64, 66. First and second faces 76, 78, which are generally flat, couple the first and second sides 72, 74 at opposing ends of each cell 44. As shown in FIG. 6, the first and second sides 72, 74 may include only a small rounded portion, for instance where the sides 72, 74 meet the faces 76, 78.

To also facilitate discussion, the illustrated configuration of the cells 44 may be configured to be a horizontal stack, where the cells 44 are positioned such that the first and second faces 76, 78 are substantially parallel to the base 46 and the top portion 48, and are substantially perpendicular to gravity when the base 42 is placed on a flat surface. However, a vertical configuration is also encompassed by this disclosure, such as where a direction from the base casing portion 70 to the terminals 64, 66 is substantially aligned with gravity when the base 42 is placed on a flat surface. Further, in some embodiments, the back ends 58 of the battery modules 28 may have a configuration that allows the modules 28 to rest on a flat surface during operation. For instance, the back ends 58 may have a footing or similar feature.

The cells 44 in a particular column 80, 82 (there are two such columns in the illustrated modules 28) may be considered to be vertically spaced such that there is a gap between the respective first face of a first cell and the respective second face of a second cell. Such embodiments are described in further detail below. However, it should be noted that the columns may also be generally referred to as "lineups" of cells in the housing 40, where the lineups may generally denote an aligned array of the battery cells 44, as shown, and is also intended to encompass orientations other than the specific orientation illustrated.

The columnar configuration (e.g., two adjacent columns, such as a lineup and an additional lineup) and the standardized dimensions of the cells 44 may be desirable, for example, to maintain standard dimensions for the base 46 across the different embodiments of the lithium ion battery modules 28A-28C. Indeed, it is now recognized that a combination of the cell chemistry (e.g., NMC/LTO battery cells), cell shape (e.g., prismatic), and cell size may facilitate production of the modules 28 in this way, and may provide a desired energy density for the modules 28. For example, it is now recognized that NMC/LTO battery cells, or other cells that do not swell by more than a predetermined amount, for example by no more than between 0.1% and 15% (e.g., 0.5% and 5%) in any direction, such as by no more than 5% in any direction, may enable a total cell volume to be defined for each housing 40, and the remaining layout of the lithium ion battery module 28 to be defined relative to this volume. Such an approach may be further appreciated with respect to FIGS. 4-7, which depict various aspects of an approach to generate a plurality of the lithium ion battery modules 28 having a defined footprint (i.e., dimensions for their respective bases 46). While the disclosure set forth below is described in the context of a particular footprint, it is noted that the approach may be suitable for other footprints and other types of cells.

As set forth above, the base 46 of the lithium ion battery module 28 generally defines its footprint. With regard to vehicle integration, this can be an important design concern in that certain sizes for the base 46 may be desired for integration into a particular vehicle due to, for example, spatial constraints. Again, the base 46 may be represented by the dimensions of the portion of the battery module housing 40 that is ultimately mounted to or rests on a surface of the xEV 10 (e.g., closest to the ground/floor).

As shown in FIG. 4, which is a combined illustration 90 of outer dimensions of the modules 28A-28C shown in FIG. 3, all the housings 40 include the base 46, which generally corresponds to a length (L) and a width (W) of each of the lithium ion battery modules 28. Although the lithium ion battery modules 28 are intended to represent advanced battery modules having lithium ion battery cells, the base 46 may correspond to any one of the many group representations (e.g., Battery Council International (BCI) group numbers, Deutsche Industrie Normen (DIN codes), European Norm (EN) codes) established for traditional lead acid batteries (e.g., lead acid battery module 30 in FIG. 2). Each group (e.g., group number) from these established set of standards has a standard length and width for the base of the particular battery corresponding to the particular group designation. The secondary lithium ion battery modules described herein may or may not have dimensions that substantially match or comply with the standard dimension requirements of at least a base of a known lead acid battery standard (e.g., a BCI group, DIN code, or EN code).

As one example, L and W may be sized to have an H5 (where "H5" is a DIN code) base, which is 242 mm in L by 175 mm in W. The H5 base is also commonly referred to as an LN2 base. However, the base 46 of the lithium ion battery modules 28 may have any length and width suitable to substantially match a particular base of a lead acid battery. Further, it should be noted that although standardized for lead acid batteries, it can be difficult to conform to such standard using lithium ion battery cell technologies, especially when considering that lithium ion battery modules, such as those described herein, may be associated with equipment not found in traditional lead acid batteries such as intelligent control features, thermal management features, advanced venting features, and so forth. Using the configuration of the cells 44 set forth above and described in further detail below, such standards may be realized.

It should be noted that the present disclosure is not limited to the bases 46 of the lithium ion battery modules 28 being the same size as a lead acid standard. Rather, the lithium ion battery modules 28 may have any size for their respective bases 46, which in certain embodiments may be the same for the different lithium ion battery modules 28. According to the invention, L is a value between 150 mm and 450 mm, and W is a value between 100 mm and 200 mm, where the values match for all the modular lithium ion battery modules 28. Further, as also shown, the modules 28 have a lip 92 on the base 46, which may be a hold down feature configured to enable fastening of the battery module 28 to the xEV 10. In other embodiments, no lip 92 may be present. In the illustrated embodiment, W corresponds to the dimensions established by the lip 92, while in other embodiments where the lip 92 is not present, the width may be W', which may be shorter or the same (in which case the other portions of the module housing 40, such as the sides, may have a corresponding size to match the base 46).

Again, the respective heights H₁, H₂, H₃, of the battery modules 28A-28C, respectively, may differ based on their power components. In one embodiment and by way of non-limiting example, H₁ may be between 130 and 160 mm, such as 150 mm, H₂ may be between 160 mm and 180 mm, such as 170 mm, and H₃ may be between 160 mm and 200 mm, such as 190 mm. It should be noted that the respective heights of the different modules 28 may also be subject to design constraints. As an example, if the modules 28 are intended to be placed under the hood of the xEV 10, the heights H₁-H₃ should be tall enough to allow the use of a desired number of battery cells 44, but be short enough to enable the hood of the xEV 10 to close. Similar spatial constraints may be placed on the battery module design depending on, among other things, its intended placement.

To determine the available space for certain components other than the battery cells 44, it may be desirable to determine an available cell volume for the module 28 within the housing 40, which in turn depends on the desired output of the module 28, the number of cells 44 required to provide the output (which may be represented by, for example, the energy density of the cells 44), and so forth. FIG. 5 depicts an example overlay 100 of respective available cell volumes 102A-102C for the first, second, and third lithium ion battery modules 28A-28C. The illustrated cell volumes 102A-102C may be considered to represent the volume and dimensions within the housings 40A-40C available to be occupied by the battery cells 44 in combination with any retaining, clamping, and spacing features within the housings 40A-40C. It is now recognized that the portion of the respective volumes 102A-102C occupied by the cells 44 and their associated securement features may be reduced or minimized in accordance with certain embodiments described herein, such as when the cells 44 are substantially non-swelling, and/or when the modules 28 do not use hold down or clamping features for the cells 44. Indeed, such embodiments may reduce the occupied portion of the available cell volume 102 compared to embodiments where clamping and hold down features for the cells 44 are utilized.

Again referring to an embodiment where the modules 28 have an H5 base, the dimensions of the available cell volume 102 may be between 220mm and 240mm for L, and between 110mm and 150mm for W, such as 235mm and 140mm, respectively. For the first module 28A, a height H₄ of the available volume 102A may be between 40mm and 50mm, such as 45mm. For the second module 28B, the height H₅ of the available volume 102B may be between 80mm and 100mm, such as 90mm, and for the third module 28C, the height H₆ of the volume 102C may be between 135mm and 165mm, such as 145mm.

As may be appreciated, the amount of the available cell volume 102 that is occupied in a particular lithium ion battery module 28 may depend on the number of the battery cells 44, the shape and dimensions of the battery cells 44, and the manner in which the cells 44 are positioned within the housing 40 of the module 28. Accordingly, dimensions, shapes, and chemistries of the battery cells 44 may be designed to achieve a desired form factor, volume, and output. As noted above and shown in greater detail in FIG. 6, the battery cells 44 described herein generally have a prismatic shape, which generally includes a rectangular shape, and may also include certain rounded sides as shown in FIG. 3. Dimensions of the prismatic battery cell 44, as shown in FIG. 6, include a cell length (CL) along the sides 72, 74, a cell width (CW) along the terminal and base portions 62, 70, and a cell thickness (CT) extending between the first and second faces 76, 78. As one example, the battery module 28 may be designed to have an H5 base with a 12V or a 48V output, and a 10 Ah or 20 Ah capacity, using cells 44 that have a CL of 140 mm with a tolerance of 0.5 mm, a CW of 112 mm with a tolerance of 0.5mm, and a CT of 14 mm with a tolerance of 0.5mm. However, the cell dimensions may vary, depending on the desired dimensions of the modules 28.

Based on the dimensions set forth above for the battery cells 44, the voltage of the battery modules 28, and the number of battery cells 44 used in the modules 28, an energy density (e.g., average) of the battery cells 44 may be determined. The energy density determined from the dimensions set forth above may be volume-based (e.g., a volumetric energy density). However, example weights of the battery cells 44 are also provided herein to describe the energy density based on their mass (e.g., a gravimetric energy density).

While the battery modules 28 described herein may have any number of battery cells 44, as shown in FIG. 3, certain specific embodiments of the battery modules 28 may have six, twelve, or twenty of the battery cells 44. The battery cells 44 may also have an operating voltage that enables the battery modules 28 to have a desired overall voltage, depending on the number of battery cells 44 and the manner in which the cells are electrically connected. For instance, the battery cells 44 may have a nominal voltage of between 2.0 V and 4.2 V. The nominal voltages described herein may be considered to represent a design voltage of the battery cells 44, which may be primarily determined by the active materials employed at the anode and cathode of the cells 44. The nominal voltages of the battery cells described herein may be, for example, 2.0 V, 2.1 V, 2.2 V, 2.3 V, 2.4 V, 2.5 V, 2.6 V, 2.7 V, 2.8 V, 2.9 V, 3.0 V, 3.1 V, 3.2 V, 3.3 V, 3.4 V, 3.5 V, 3.6 V, 3.7 V, 3.8 V, 3.9 V, 4.0 V, 4.1 V, or 4.2 V. Such voltages may be achieved using specific combinations of battery cell chemistries, which are discussed in further detail below. The respective capacities of the battery cells 44 may also be at least partially based on the specific battery cell chemistries utilized, as well as other parameters (e.g., the amount of active material in the battery cells 44). For instance, the battery cells 44 may have a capacity that ranges between 8 Ah and 12 Ah.

In view of the foregoing, it should be appreciated that the amount of electrode active material that is able to be utilized in each battery cell 44 may also be a function of the volume of each battery cell 44. In this regard, it should also be appreciated that there is a balance to be struck between the various power and charge capabilities of the battery cells 44 and their size. In accordance with certain aspects of the present disclosure, it is now recognized that the volumetric energy densities described herein for the battery cells 44 may be particularly useful in the construction of embodiments of the battery modules 28 having a desired footprint (e.g., an H5 footprint) while also having desired electrical capabilities (e.g., charge and storage capabilities, power output).

The volumetric energy density of a particular battery cell may be obtained using the volume and energy of the battery cell 44. The energy of each battery cell 44, as calculated herein, is the product of the nominal voltage and the capacity of the battery cell 44. The volume is then divided into the calculated energy to obtain the volumetric energy density. The gravimetric energy density may also be obtained by dividing the weight of the battery cell 44 into the calculated energy of the cell 44.

Using the dimensions set forth above for the battery cell 44 (where CL is 140 mm, CT is 14 mm, and CW is 112 mm, a volume of 0.22 L), a capacity range of between 8 Ah and 12 Ah, and nominal voltages ranging from 2.0 V to 4.2 V, the volumetric energy density of the battery cells 44 may range between 73 Watt hours per Liter (Wh/L) and 230 Wh/L, depending on the nominal voltage and capacity of the cells 44. More specific examples of the volumetric energy density of the battery cells 44 are provided in Table 1.

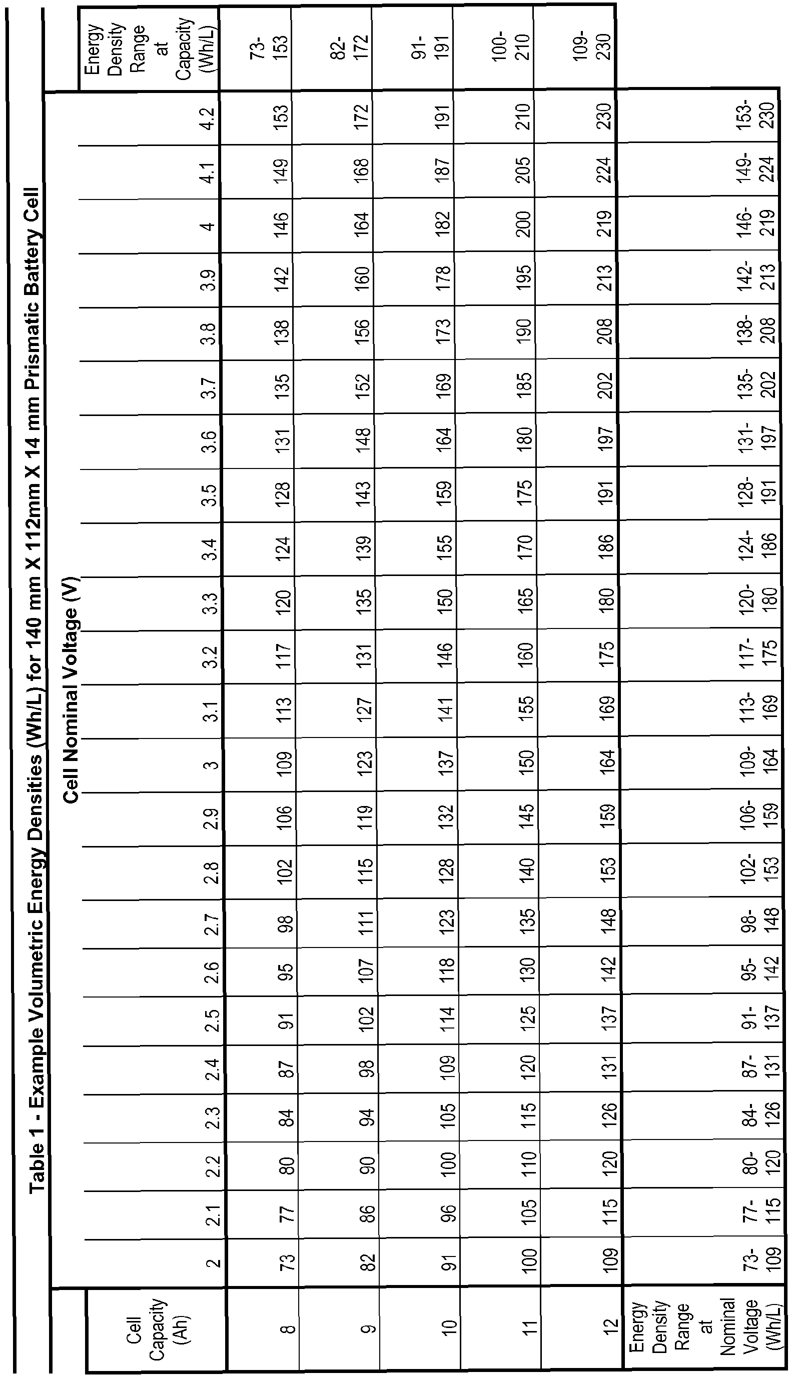

These example volumetric energy densities may, in certain embodiments, enable the battery modules 28 to have an energy sufficient for incorporation into certain embodiments of the battery system 12 of the xEV 10, such as for micro-hybrid applications. Indeed, it has been found that the dimensions of the battery cells 44 set forth above, in combination with the cathode and anode electrode active material chemistries set forth above, may enable the battery modules 28 to have certain dimensions conforming to certain desired standards while still providing a desired electrical output (e.g., an H5 base that is similar across different versions of the battery modules 28).

In certain embodiments where the battery cells 44 are incorporated into an embodiment of the battery module 28 used in electrical communication with a lead-acid battery module, the battery cells 44 may have a voltage that is similar to (e.g., matched to) a voltage of the lead-acid cells of the lead-acid battery module. Such voltages may be achieved by active control of the charge state of the battery cells 44 (e.g., by the control module 32 of FIG. 2), and/or by the selection of particular electrode active materials, and may range between 2.1 V and 2.5 V (which may depend on the particular manner in which the lead-acid battery module is utilized and the manner in which the lithium ion battery cells 44 are controlled). Accordingly, as set forth in Table 1 above, the volumetric energy density of the battery cells 44 having a volume of 0.22 L and a nominal voltage between 2.1 V and 2.5 V may range from 77 Wh/L to 137 Wh/L. In one particular embodiment, when the nominal voltage is 2.3 V, the volumetric energy density may be between 84 Wh/L and 126 Wh/L depending on the capacity of the battery cell 44, such as 105 Wh/L at a capacity of 10 Ah. It is now recognized that embodiments of the battery cells 44 described herein, having such an energy density range, may be particularly well-suited for embodiments of the battery modules 28 used in combination with a traditional lead-acid battery module (e.g., in micro-hybrid applications).

In still further embodiments, the battery cells 44 may have dimensions that are similar to those set forth above, for example within a certain range. The range may, in certain embodiments, be based on a tolerance as defined by manufacturing specifications. The associated tolerances may allow between 0.5% to 5% variation in CT, CW, and/or CL, meaning that the value of CT, CW, and/or CL for the manufactured battery cells 44 may range from between 0.5% and 5% below the defined manufacturing value to between 0.5% and 5% above the defined manufacturing value (e.g., plus or minus a particular amount, such as 0.5 mm). As one example, the cell thickness CT may be between 13 mm and 15 mm, the cell length CL may be between 139 mm and 141 mm, and the cell width CW may be between 111 mm and 113 mm. In accordance with such embodiments, the volumes of the battery cells 44 may range between 0.20 L and 0.24 L (e.g., between 0.21 L and 0.23 L). Other cell volumes may fall within the scope of the present disclosure, depending on their energy density, nominal voltage, and so forth.

Specific examples of volumetric energy density calculated for the battery cells 44 having a cell thickness CT of 13 mm, a cell length CL of 139 mm, and a cell width of 111 mm are set forth in Table 2. In addition, specific examples of volumetric energy density calculated for the battery cells 44 having a cell thickness CT of 15 mm, a cell length CL of 141 mm, and a cell width of 113 mm are set forth in Table 3.

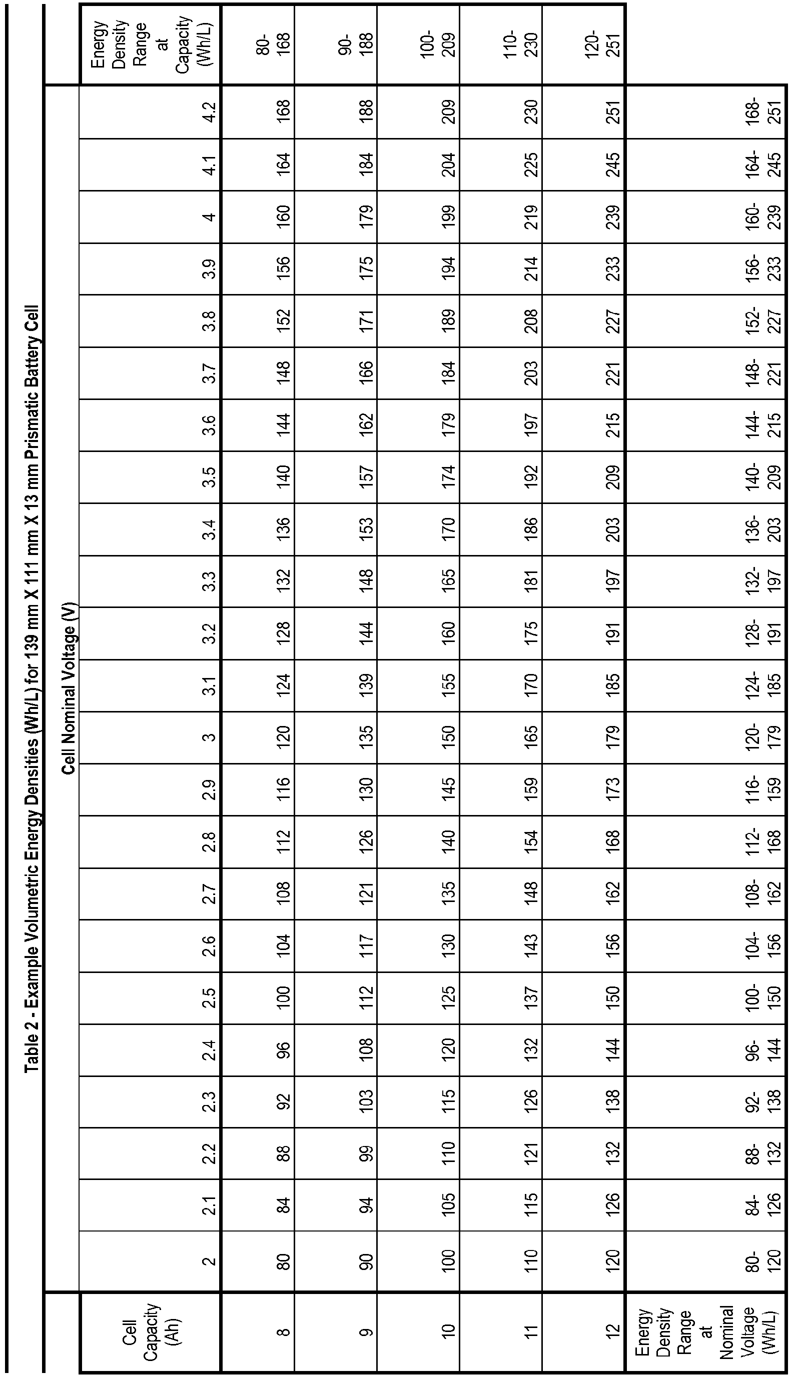

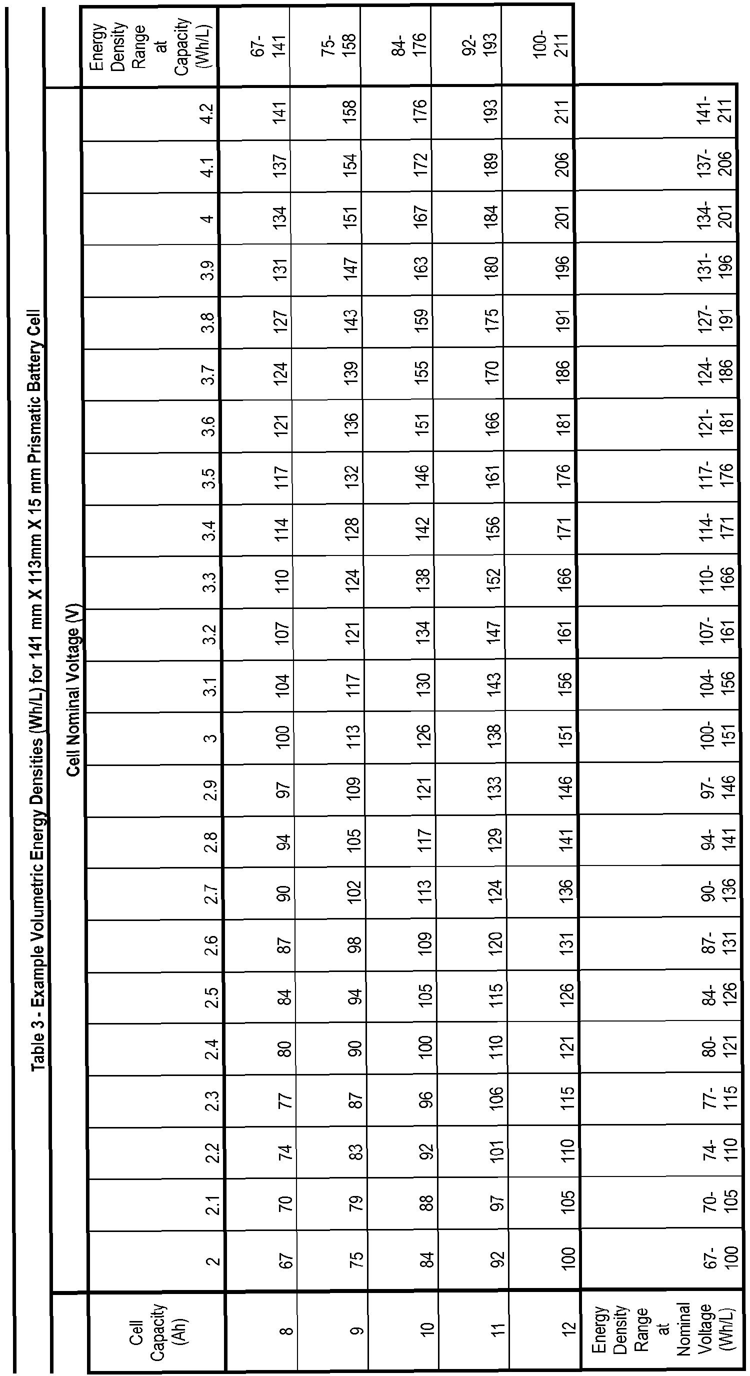

In view of the foregoing description and tables, it should be appreciated that the battery cells described herein may have a range of capacities, nominal voltages, and volumetric energy densities. A non-limiting list of example battery cell characteristics are set forth herein. According to the invention, CT, CW, CL, and the electrochemically active components of the battery cell 44 are such that the lithium ion battery cell 44 has a volumetric energy density between 67 Watt-hours per Liter (Wh/L) and 251 Wh/L, and has a nominal voltage between 2.0 V and 4.2 V. According to the invention, CT is between 13 mm and 15 mm, CL is between 138 mm and 142 mm, and CW is between 109 mm and 114 mm. In another example, the volumetric energy density is between 80 Wh/L and 251 Wh/L, and the lithium ion battery cell 44 has a capacity between 8 Ah and 12 Ah. In another example, CT is 14 mm, CL is 140 mm, and CW is 112 mm, and the volumetric energy density is between 77 Wh/L and 137 Wh/L, the nominal voltage is between 2.1 V and 2.5 V, and the lithium ion battery cell 44 has a capacity between 8 Ah and 12 Ah.

While the tables and description set forth above denote particular ranges and examples for voltages, dimensions, capacities, and energy densities for prismatic battery cells 44, further size variations, shape variations, and so forth, of the battery cells 44 and/or the battery modules 28 housing the battery cells 44 are also within the scope of the present disclosure. For example, the values noted herein for the dimensions (e.g., CT, CL, CW) of the prismatic battery cells 44 may be particularly useful in the construction of embodiments of the battery modules 28 having an H5 footprint, but these battery cells 44 may also be useful in other configurations. For instance, battery cells 44 having the energy densities, dimensions, etc., as set forth above, may be used in embodiments of the battery modules 28 having dimensions that correspond with dimensions of many different traditional lead-acid batteries (e.g., as set forth in DIN, BCI, or EN codes). Different shapes and sizes for the battery cells 44 may include dimensions resulting in a volume ranging from 0.20 L to 0.24 L as set forth above, but CW, CL, and CT may have different respective dimensions than those set forth in the examples above. For instance, one of CW, CL, or CT may be increased relative to the ranges set forth above, while at least one other of CW, CL, or CT is decreased to maintain the overall volume within such a range. However, as noted above, other volumes and shapes (e.g., cylindrical) may fall within the scope of the present disclosure, depending on their particular energy densities, nominal voltages, capacities, and so forth.

As one non-limiting example of cell dimensions relative to dimensions of the battery module 28, the base 46 of the module 28 corresponds to an H5 DIN base, CT of each battery cell 44 (prismatic casing) is between 13 mm and 15 mm, CL of each battery cell 44 (prismatic casing) is between 138 mm and 142 mm, CW of each battery cell 44 (prismatic casing) is between 109 mm and 114 mm, and a volume of each battery cell 44 (prismatic casing) is between 0.2 L and 0.24 L. As another example, CT of each battery cell 44 (prismatic casing) is between 13.5 mm and 14.5 mm, CL of each battery cell 44 (prismatic casing) is between 139.5 mm and 140.5 mm, CW of each battery cell 44 (prismatic casing) is between 111.5 mm and 112.5 mm, a volume of each battery cell 44 (prismatic casing) is between 0.21 L and 0.23 L, and the volumetric energy density of each prismatic lithium ion battery cell is between 82 Wh/L and 153 Wh/L, and the nominal voltage of each battery cell 44 is between 2.0 V and 3.0 V.

As set forth above, the energy density of the battery cells 44 may also be expressed as a gravimetric energy density (i.e., energy density based on weight). As an example, in embodiments where CT is between 13 mm and 15 mm, CL is between 138 mm and 142 mm, and CW is between 109 mm and 114 mm, the weight of the battery cells 44 may be between 400 g and 500 g, such as between 410 g and 490 g, between 420 g and 480 g, or between 430 g and 470 g. Further examples may include a weight ranging between 440 g and 490 g, such as between 450 g and 470 g, or between 451 g and 464 g. In certain specific embodiments, such as when CT is 14 mm, CL is 140 mm, and CW is 112 mm, the weight of the battery cells 44 (e.g., an average weight of a manufactured set) may be between 410 g and 490 g, such as between 440 g and 490 g, (e.g., between 450 g and 465 g).

Because the energy of the battery cells, as set forth in the tables above, may be between 16 Wh and 50 Wh based on nominal voltages ranging between 2.0 V and 4.2 V and a capacity ranging from 8 Ah to 12 Ah, the gravimetric energy density may range between 32 Wh/kg for the 500 g (0.5 kg) battery cells and 126 Wh/kg for the 400 g (0.4 kg) battery cells. Specific examples of gravimetric energy densities and energy density ranges for different battery cell weights are provided in Table 4. In one non-limiting example, in addition or as an alternative to the volumetric energy densities set forth above, the weight of the battery cell 44 is between 400 g and 500 g, and the battery cell 44 has a gravimetric energy density between 32 Wh/kg and 126 Wh/kg (e.g., between 44 Wh/kg and 93 Wh/kg), and the battery cell 44 has a capacity between 8 Ah and 12 Ah. In a further example, the weight of the battery cell 44 is between 420 g and 450 g, and the gravimetric energy density of the battery cell 44 is between 38 Wh/kg and 112 Wh/kg. As yet a further example, the weight of the battery cell 44 is 420 g, the gravimetric energy density is between 48 Wh/kg and 71 Wh/kg, and the nominal voltage is between 2.0 V and 3.0 V. As a more specific but non-limiting example, the weight of the battery cell 44 is 420 g, the gravimetric energy density is between 48 Wh/kg and 71 Wh/kg, and the nominal voltage is between 2.0 V and 3.0 V. As another non-limiting example, the weight of the battery cell 44 is between 450 g and 500 g, the nominal voltage is between 2.0 V and 4.2 V, and the gravimetric energy density is between 32 Wh/kg and 112 Wh/kg. For instance, the weight of the battery cell 44 is between 450 g and 470 g, the nominal voltage is between 2.0 V and 4.2 V, and the gravimetric energy density is between 34 Wh/kg and 112 Wh/kg (e.g., when the nominal voltage is between 2.0 V and 3.0 V, the gravimetric energy density may be between 34 Wh/kg and 80 Wh/kg).

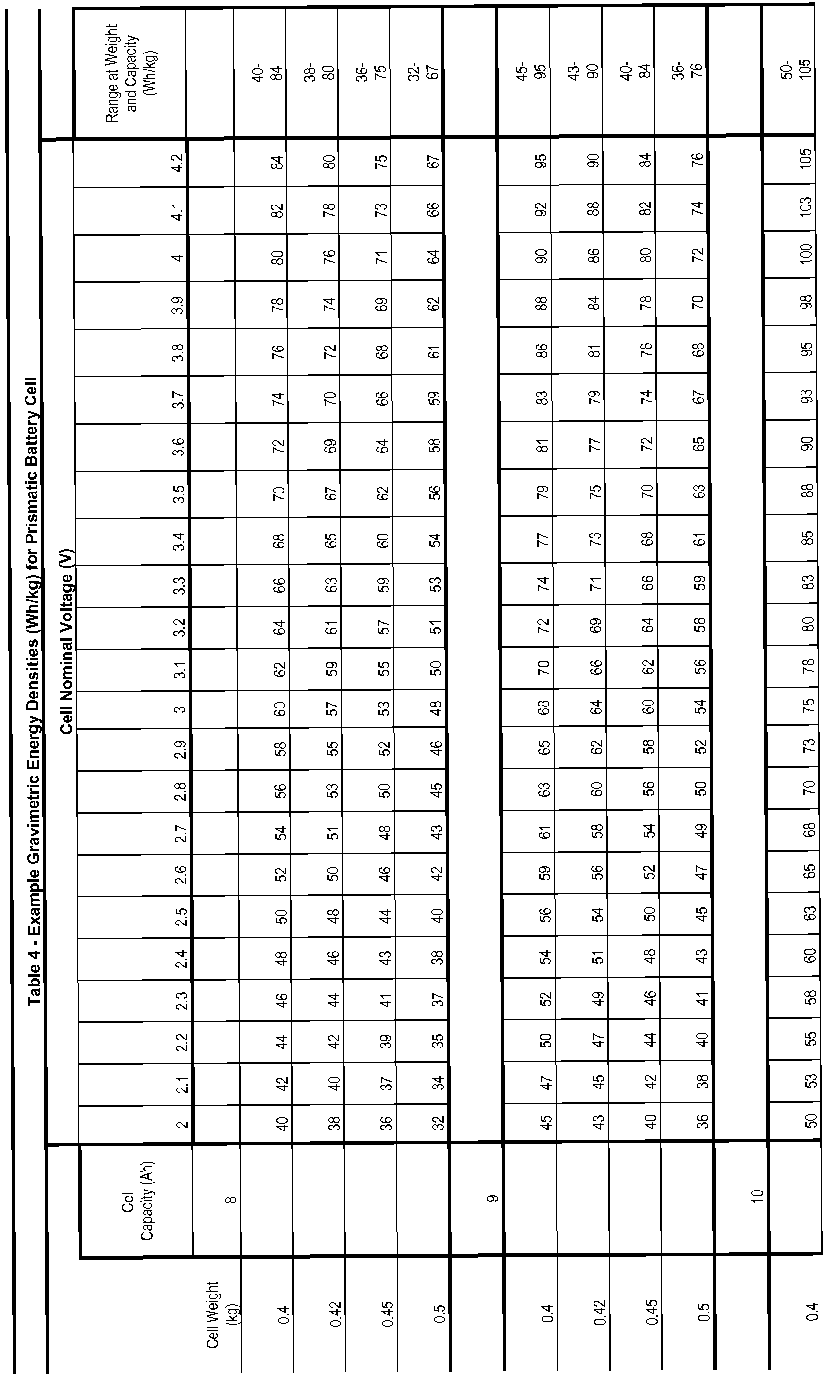

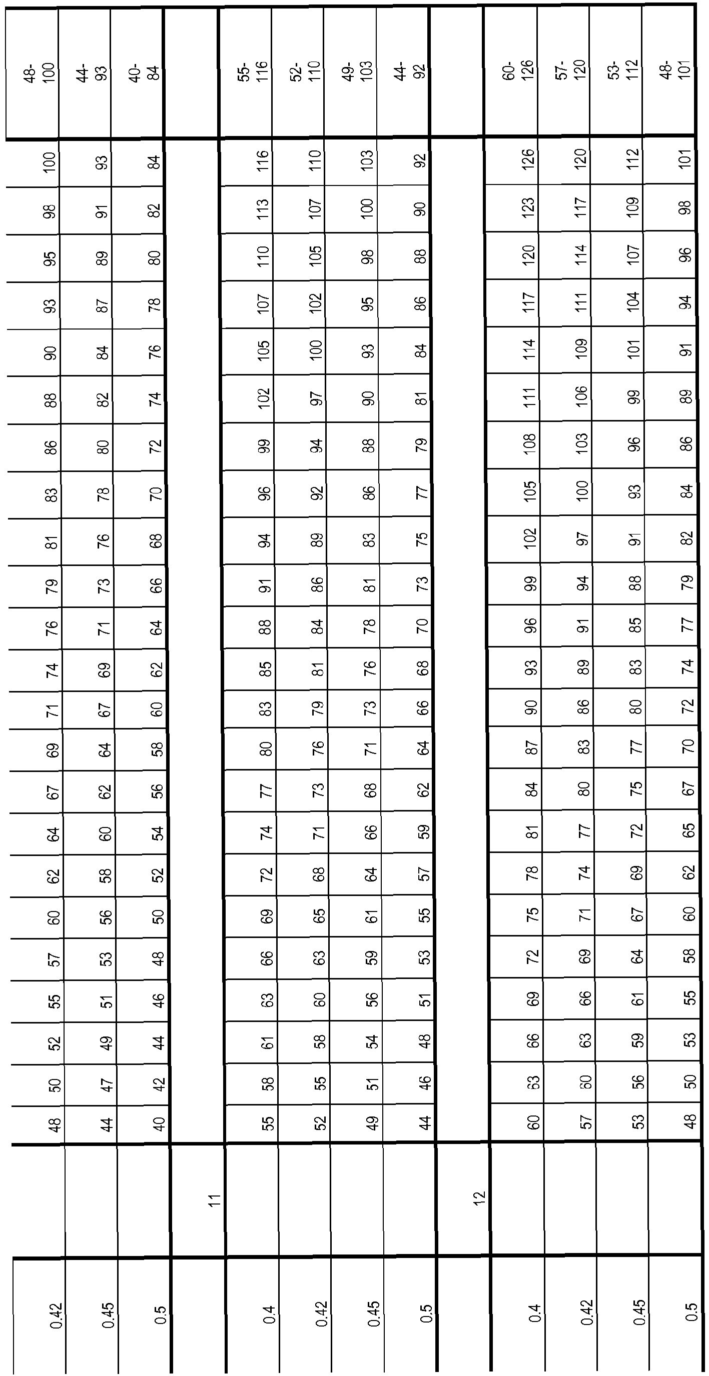

According to the data set forth in Table 4, at a nominal voltage of 2.3 V, the gravimetric energy density may range between 37 Wh/kg and 69 Wh/kg, depending on the weight and capacity of the battery cell. For a 420 g (0.42 kg) battery cell having a 10 Ah capacity, for instance, the gravimetric energy density may range between 48 Wh/kg at a nominal voltage of 2.0 V and 71 Wh/kg at a nominal voltage of 3.0 V, or 100 Wh/kg at a nominal voltage of 4.2 V. At a nominal voltage of 2.3 V and a capacity of 10 Ah, the gravimetric energy density may be 55 Wh/kg for the 420 g battery cell. As another example, for a 450 g (0.45 kg) battery cell having a capacity of 10 Ah, the gravimetric energy density may range between 44 Wh/kg at a nominal voltage of 2.0 V and 67 Wh/kg at a nominal voltage of 3.0 V. At a nominal voltage of 2.3 and a capacity of 10 Ah, the gravimetric energy density may be 51 Wh/kg for the 450 g battery cell. Again, the nominal voltages disclosed may represent a design voltage (e.g., based on a combination of positive and negative electrode active materials), which may allow for an operating window of plus or minus 200 mV (e.g., depending on the purity of the active materials, or the use of certain additives in varying concentrations). Accordingly, the battery cell 44 having a nominal voltage of 2.3 V may have an operating range of between 2.1 V and 2.5 V, and an energy density associated with those values listed in Table 4.

It should be noted that the disclosure set forth in Tables 1-4 is intended to encompass combinations of volumetric and gravimetric energy densities, as well as ranges having beginning and end points using the values set forth in the Tables. For example, where there is an overlap in nominal voltage between the data set forth in Tables 1-3 with the data set forth in Table 4, a combination of the data at that nominal voltage is intended to be disclosed. By way of specific example, at a nominal voltage of 2.3 V and a capacity of 10 Ah, the volumetric energy density may be 105 Wh/L as set forth in Table 1, or may be between 84 Wh/L and 126 Wh/L as set forth in Table 1 (based on a range of capacities), or may be between 92 Wh/L and 138 Wh/L, as set forth in Table 2, or may be between 77 Wh/L and 115 Wh/L as set forth in Table 3, with a gravimetric energy density ranging from 37 Wh/kg to 69 Wh/kg, such as 46 Wh/kg or 58 Wh/kg, as set forth in Table 4. It should also be noted that subsets of data are intended to be disclosed, such as energy density ranges falling between and encompassing the example values that would be encompassed by a corresponding range. For instance, referring again to the nominal voltage of 2.3 V in Table 4, a range of between 51 Wh/kg and 55 Wh/kg is intended to be disclosed for the values identified for the 420 g battery cell and the 450 g battery cell, respectively, with a range of battery cell weights of between 420 g and 450 g being associated therewith.

In one particular example, the battery cells 44 may have an average CT of 14 mm, a CL of 140 mm, and a CW of 112 mm, and a weight of 420 g. In such an embodiment, at a nominal voltage of 2.3 V, the volumetric energy density may be 105 Wh/L and the gravimetric energy density may be 55 Wh/kg at a capacity of 10 Ah. To the extent that the capacity may range from 8Ah to 12 Ah, the battery cell having the dimensions above and nominal voltage of 2.3 V may have a volumetric energy density ranging between 84 Wh/L and 126 Wh/L, and a gravimetric energy density ranging between 44 Wh/kg and 66 Wh/kg.

In another particular example, the battery cells 44 may have an average CT of 14 mm, a CL of 140 mm, and a CW of 112 mm, and a weight of 450 g. In such an embodiment, at a nominal voltage of 2.3 V and a capacity of 10 Ah, the volumetric energy density may be 105 Wh/L and the gravimetric energy density may be 51 Wh/kg.

Furthermore, it should be noted that while the dimensions, weights, and associated energy densities set forth above may be applicable to any one or a combination of cell chemistries for the battery cells 44, the data is intended to be particularly applicable to embodiments of the battery cells 44 where NMC is used as a cathode active material and LTO is utilized as an anode active material. The NMC and/or LTO may be used alone, or in combinations with other active materials. For instance, the NMC may be mixed with other lithiated metal oxides.

Referring again to the configuration of the prismatic battery cell 44 shown in FIG. 6 the battery cells 44 may include the first and second terminals 64, 66, which may include the same or different metals, depending on the anode and cathode active materials. The chemistry of the cell, in certain embodiments, may include NMC as a cathode active material and LTO as an anode active material as noted above. Indeed, because the lithium ion battery module 28 may be placed in parallel with a lead acid battery module, it may be desirable to use such electrode active materials, since each lithium ion battery cell will be substantially voltage matched with each lead acid battery cell, which may provide a number of operational benefits including charge balancing, overcharge and overdischarge protection, and so forth. However, the present disclosure is not limited to these materials, and the battery cells 44 may use any one or a combination of positive electrode active materials and negative electrode active materials.

The positive electrode active materials may generally be referred to as lithiated metal oxide or mixed metal oxide components. As used herein, lithiated metal oxides and mixed metal oxide components may refer to any class of materials whose formula includes lithium and oxygen as well as one or more additional metal species (e.g., nickel, cobalt, manganese, aluminum, iron, or another suitable metal). A non-limiting list of example lithiated metal oxides may include: mixed metal compositions including lithium, nickel, manganese, and cobalt ions such as NMC, lithium nickel cobalt aluminum oxide (NCA) (e.g., LiNiₓCo_{y}Al_{z}O₂, where x+y+z = 1), lithium cobalt oxide (LCO) (e.g., LiCoO₂), and lithium metal oxide spinel (LMO-spinel) (e.g., LiMn₂O₄). Other cathode active materials, such as layered active materials, may also be utilized. As one example, a first electrode active material (e.g., NMC) may be used in combination with a second electrode active material (e.g., an inactive lithium manganese oxide) that is inactive at the expected operating conditions of the battery cell 44 (e.g., has a higher operating voltage compared to the first electrode active material). In this way, the second electrode active material may remain inactive until certain conditions are met, for example during overvoltage situations. Under such conditions, the second electrode active material may act as a lithium sink and may delay the onset of a possible thermal runaway of the battery cell 44.

The negative electrode active materials of the present battery cells 44 may be considered to include electrode active materials having a voltage that is lower versus Li⁺/Li⁰ compared to the positive electrode active materials. In accordance with certain embodiments of the present disclosure, the negative electrode active materials may include certain titanate species (e.g., LTO), graphite, or a combination of the two. In still further embodiments, the negative electrode active material may include other electrode active materials either alone or in combination with LTO and/or graphite. In view of the foregoing, it should be appreciated that a number of different chemistries may be utilized in accordance with the battery cell dimensions and other considerations described herein. For instance, the battery cells 44 may be NMC/LTO battery cells, NMC/graphite battery cells, NCA/graphite battery cells, and so forth. The nominal voltage of the battery cells 44 described herein is generally determined by the particular active materials used at the positive and negative electrodes. For instance, the nominal voltage of the battery cells may be the voltage of the positive electrode active material versus Li⁺/Li⁰, less the voltage of the negative electrode active material versus Li⁺/Li⁰.

Generally, the cathode terminal (e.g., terminal 66) will be an aluminum terminal. However, different anode active materials may utilize different terminal materials. For example, in embodiments where the anode active material includes graphite, the anode terminal (e.g., terminal 64) will generally be copper. On the other hand, in embodiments where the anode active material is lithium titanate, the anode terminal may be aluminum. Indeed, it is now recognized that in embodiments where the battery cells 44 use LTO as the anode active material (e.g., as in an NMC/LTO cell), bimetallic regions in the battery module 28 may be reduced or eliminated. For example, in such embodiments, bus bar connections between anode and cathode cell terminals may use a single conductive material (e.g., aluminum), rather than a mixture of conductive materials (e.g., aluminum and copper) that would otherwise cause unwanted galvanic effects. The illustrated terminals 64, 66 are also shown as being flat. However, in other embodiments, the terminals 64, 66 may be post terminals, as shown in FIG. 3.

The prismatic battery cells 44 may also include an active area 120, which is schematically outlined as a dashed box in FIG. 6. The active area 120 may have any shape and size, and is determined based on a corresponding location in the interior of the cell 44 of a "jelly roll," which is a common term that refers to a rolled assembly of anode and cathode layers and an electrolyte, along with a separator layer positioned between the anode and cathode layers. That is, the active area 120 corresponds to an interior location of the cell 44 where, in some embodiments, swelling can occur. As may be appreciated, swelling of the anode layers due to lithium intercalation may cause the jelly roll to de-laminate, which increases the internal resistance of the cell 44 and reduces its performance. This increase in resistance may also cause additional heating, which can cause the electrolyte to begin to vaporize and potentially decompose. Generally, if a prismatic battery cell swells, it will swell in the active area 120 and will increase in cell thickness (CT). As described in further detail below, in accordance with the invention, the active area 120 may be in an uncompressed state (e.g., opposing normal forces are not placed on the active area 120) when placed in the housing 40 and, in a further embodiment, may remain in an uncompressed state during operation of the lithium ion battery module 28. In other not claimed examples, such as those where swelling does occur (e.g., if graphite is the anode active material), then the swelling may be allowed to occur such that the cells in a column or lineup are placed into a compressed state by their swelling.

To illustrate, FIG. 7 includes a combined cutaway view of the lithium ion battery modules 28A-28C, which includes a first column of prismatic battery cells 80 and a second column of prismatic battery cells 82 disposed adjacent to the first column. The prismatic battery cells 44 in each of the columns may be considered to be in a spaced arrangement, in that each prismatic battery cell 44 in the column is spaced apart from an immediately adjacent battery cell 44 by a distance. In accordance with an embodiment, the distance may define an air gap that enables the first and second faces 76, 78 to contact a thermal management fluid (e.g., air). Such embodiments are described in further detail below. However, it should be noted that the description set forth below may also apply to configurations in which there is no gap between the prismatic battery cells 44 in each lineup.

As shown in the illustrative example, there are two cell columns (lineups) in the modules 28, and the number of lineups and/or cells 44 in each lineup is determined by the total number of cells utilized in the module 28. In other embodiments, there may be only one lineup of cells, or more than two lineups. Using the dimensions set forth above for the module 28 and the each battery cell 44, it can be seen that the number of cells 44 used in the module 28, along with their dimensions, is such that the volume occupied by the cells 44 easily fits within the dimensions of the housings 40. As shown with respect to the width of the columns 80, 82 (e.g., lineups), twice the cell width (2^{∗}CW) and an additional space (represented as "X") can be fit within the profile, meaning that the cells may not need to be in intimate contact, or there is additional space for other features (e.g., spacers) to be positioned within the module housing 40.

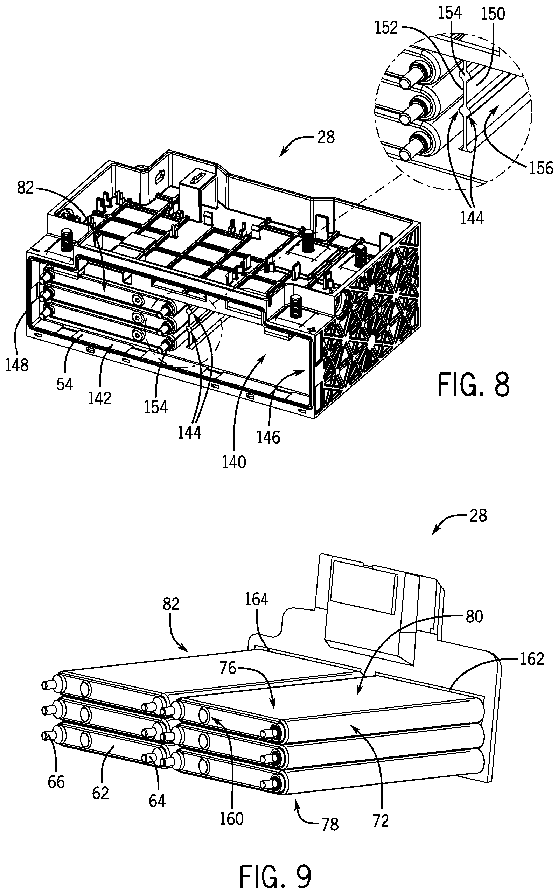

The spaced (e.g., vertically-spaced) arrangement noted above may be further appreciated with reference to FIG. 8, which depicts an embodiment of the battery module 28 in which the cell receptacle region 54 includes first and second cell regions 140, 142 corresponding generally to the first and second cell columns (lineups) 130, 132. Each of the illustrated cell regions 140, 142 includes features configured to place the cell columns in a horizontal orientation in which they are in a vertically-spaced arrangement. Specifically, in the illustrated embodiment, the regions 140, 142 include fixed protrusions 144 that extend inwardly into each region 140, 142 from internal surfaces of the housing 40. In the illustrated embodiment, the internal surfaces include a first sidewall 146 (e.g., internal sidewall) positioned within the cell receptacle region 54, a second sidewall 148 (e.g., internal sidewall) positioned opposite the first sidewall 146, and first and second sides 150, 152 of a cell column divider 154. The cell column divider 154 is generally configured to separate the cell columns 130, 132, and also provides an internal surface to enable discontinuous slots 156 (e.g., partial enclosures) to be formed within the cell regions 140, 142. In an embodiment, the cell column divider 154 is midway between the first and second sidewalls 146, 148.

Thus, the regions 140, 142 each include a column of the discontinuous slots 156, each discontinuous slot 156 being configured to receive a single one of the prismatic battery cells 44 and extending across a width of a respective one of the regions 140, 142. The discontinuous slots 156, and, more particularly, the protrusions 144 of the discontinuous slots 156, are configured to suspend the prismatic battery cells 44 within the housing 40 in a floating arrangement. Again, the floating arrangement may be considered to be one in which the cells 44 are not clamped to one another, not clamped in place to the protrusions 144 or the housing 40, and are not compressed. Further, in certain embodiments, the respective active area 120 of each prismatic battery cell 44 is not in contact with any retaining or other feature, including the fixed protrusions 144. In other embodiments, one or more thermal management features, such as thermal gap pads (not shown) or the like, may be included within the discontinuous slots 156 in combination with a respective prismatic battery cell 44. For example, the thermal gap pads may be positioned in parallel with and against the prismatic battery cells 44.

In some embodiments, the protrusions 144 may suspend the cells 44 within the housing 40 by contacting only a periphery of the cells 44. For example, the fixed protrusions 144 may extend substantially the entire cell length (CL) along the sides 72, 74 of the prismatic battery cells 44, and contact only the sides 72, 74 when the module 28 is fully formed and in operation. That is, in a fully assembled battery module 28, portions other than the sides 72, 74 of the battery cells 44 (at least cells 44 between the extreme upper and lower cells 44) may not be contacted by the housing outside of contact by the protrusions 144.

The floating arrangement of the cells 44 may be further appreciated with reference to FIG. 9, which depicts the housing 40 removed from the cells 44. As illustrated, the cells 44 in each of the columns 80, 82 are vertically spaced from one another (e.g., by the protrusions 144) such that a gap 160 exists between a respective first face 76 of a first cell and a respective second face 78 of a second cell. The gap 106 may be an air gap that enables the active areas 120 of the cells 44 to contact a thermal management fluid (e.g., air). Indeed, in accordance with certain embodiments of the present disclosure, the cells 44 may be NMC/LTO cells (i.e., cells having NMC as a cathode active material and LTO as an anode active material) that swell by no more than 1%, 5%, or 10% in any direction. In this regard, the respective active areas 120 of each cell 44 may not contact one another. Further still, in certain embodiments, the cells 44 may contact thermal gap pads 162, 164 at their respective bottom portions 70 for additional thermal management.

In other not claimed examples, the cells 44 may be constructed using other chemistries, for example using other anode active materials (e.g., graphite) that cause the cells 44 to swell. In such examples, the cells 44 may be configured to swell into the gap 160, where the swelling results in a compressive force being placed on the cells 44 between the cells 44 and the housing 40 (e.g., top and bottom internal surfaces of the housing 40). In certain examples, such a configuration may be desirable where contact between charged casings of the cells 44 is desired, for example, to form an electrical connection between casings of immediately adjacent battery cells 44.

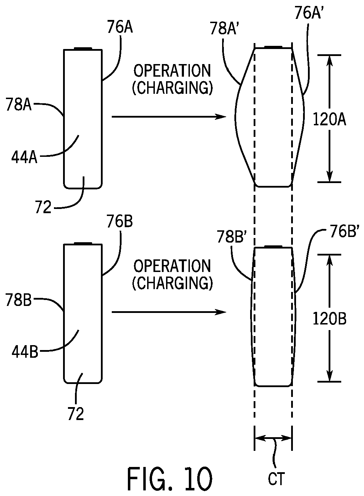

FIG. 10 is an example of the difference in cell configuration between a first battery cell 44A that exhibits swelling during operation (e.g., an NMC/graphite cell) and a second battery cell 44B that exhibits little to no swelling during operation (e.g., an NMC/LTO cell). Depending on the particular shape of the battery cells 44 (e.g., rectangular versus partially rounded prismatic), the cells 44 may swell in one direction or two directions, or may swell in several directions. For the prismatic battery cells 44, any swelling that occurs will generally be such that the cell thickness (CT) increases.

During operation, and depending on the extent to which the cells 44 are charged and discharged, the first and second battery cells 44A and 44B may swell to some extent. However, during normal operation, the swelling for the second battery cell 44B may be to a lesser extent than the first battery cell 44A, as shown by the cell thickness CT. Specifically, the first battery cell 44A transitions from having respective first and second faces 76A, 78A in a first state (e.g., low SOC) to a second state (e.g., higher SOC) having swelled first and second faces 76A', 78A' in its active area 120A.

In contrast, the second battery cell 44B does not swell to an appreciable extent, or swells to a first extent such that its periphery changes from a first periphery (e.g., from a relatively discharged state on the left) having respective first and second faces 76B, 78B, to a second periphery (e.g., in a charged state on the right) having respective swollen first and second faces 76B', 78B'. The change from the first periphery to the second periphery for the first cell 44A (e.g., an NMC/graphite cell) is generally greater than for the second cell 44B (e.g., an NMC/LTO cell), as shown. The degree of swelling may be represented by the degree of displacement of the outer surface of the cell casing 60 between the configuration of the cell 44 when in a relatively discharged state (e.g., a first state) and the configuration of the cell in a relatively charged state (e.g., a second state). The difference in thickness may be present only as swelling from one side, two sides, or more than two sides. For NMC/LTO cells, the swelling may still be present on one side, two sides, or more than two sides, but will be less than NMC/graphite cells.

It should be noted that the swelling of the prismatic battery cells 44 may also be affected by the degree to which they are discharged and charged, which is generally controlled by the control unit 32 of FIG. 2. For example, the control unit 32 may maintain a state of charge (SOC) of the lithium ion battery module 28 to a range between a first SOC and a second SOC higher than the first SOC. By way of non-limiting example, the first SOC may be between 15% and 25% and the second SOC may be between 40% and 60%. In one embodiment, the first SOC may be 25% and the second SOC may be 50%. In another embodiment, the first SOC may be 60% and the second SOC may be 90%. However, the SOC ranges noted herein are examples, and other SOC ranges may be employed in accordance with certain aspects of the present disclosure. By controlling the SOC of the battery cells 44 in this way, in some embodiments utilizing NMC/LTO cells, swelling may be negligible. There may be a number of advantages associated with such reduced, mitigated, or negligible swelling.

For instance, the floating arrangement of the prismatic battery cells may not use clamping or hold down features, which may reduce the volume of the housing 40 occupied by cells and their associated features (e.g., gap pads, spacers), and may also reduce the weight of the lithium ion battery modules 28. Further, in certain embodiments, no opposing normal forces may be placed on the first and second faces 76, 78 from outside the cells 44, meaning that the active areas 120 of the cells 44 may remain in a substantially uncompressed state, which enables heat exchange with a surrounding fluid (e.g., air), and reduces (e.g., mitigates, eliminates) thermal energy transfer between the cells 44. The reduction of thermal transfer may be desirable, for example, to reduce the effect of a thermal runaway of one of the prismatic battery cells 44 on the remaining prismatic battery cells 44.

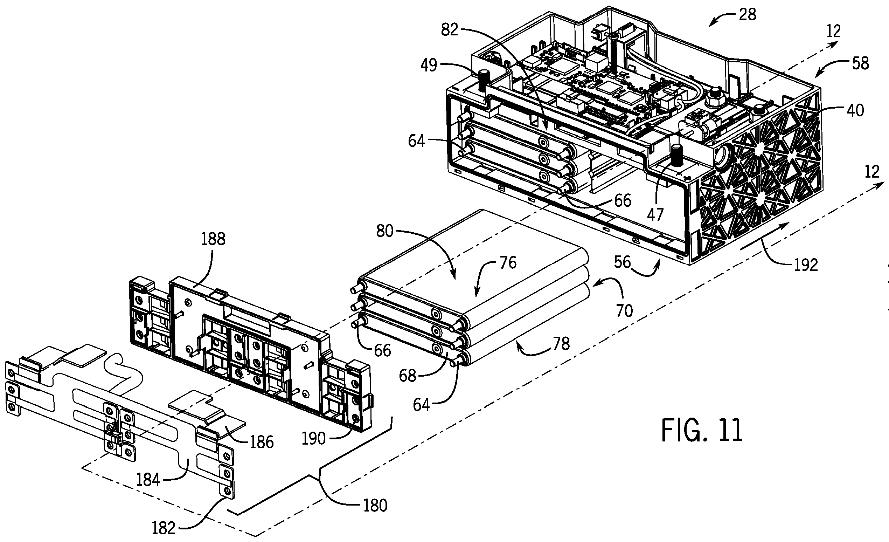

Other advantages may be associated with the prismatic battery cells 44 having mitigated, reduced, or negligible swelling in accordance with the present disclosure. For example, as illustrated in FIG. 11, the first and second prismatic battery cell columns 80, 82 may be coupled, at the respective first and second terminals of their respective prismatic battery cells 44, to an integrated bus bar and voltage sense subassembly 180. The integrated bus bar and voltage sense subassembly 180 may include bus bars 182 configured to electrically couple the cell terminals 64, 66 to a circuit 184, which places the first and second columns 80, 82 into an electrically connected grouping having a total voltage and capacity corresponding to the voltage rating and capacity rating of the lithium ion battery module 28. In this regard, the integrated bus bar and voltage sense subassembly 180 may include additional bus bars 186 configured to electrically connect the prismatic battery cells 44 (e.g., the electrically connected grouping noted above) to positive and negative terminals 47, 49 (e.g., a first terminal and a second terminal) of the lithium ion battery module 28 to enable the lithium ion battery module 28 to provide an electrical output to an external load (e.g., a load of the xEV 10).

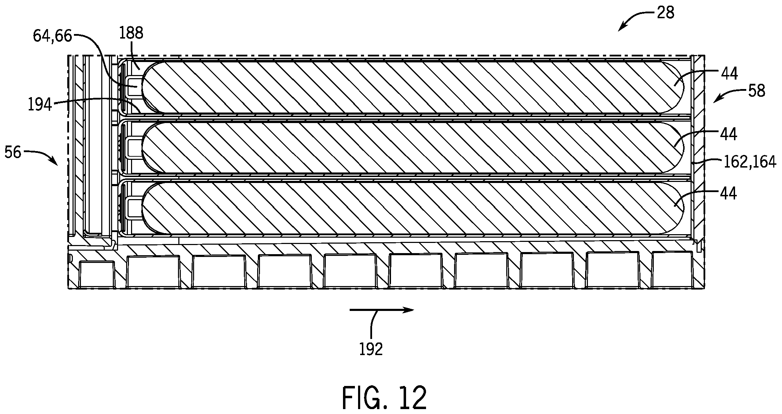

These components of the integrated bus bar and voltage sense subassembly 180 may be integrated onto a carrier 188, which is configured to provide a structural support for the bus bars 182, 186, and the circuit 184. Specifically, the carrier 188 (which may be referred to as an "e-carrier") may include corresponding connection features to hold the bus bars 182, 186, and the circuit 184, as well as openings 190 configured to receive the cell terminals 64, 66. The carrier 188, in one embodiment, may be the only feature of the lithium ion battery module 28 that provides any external compression to the prismatic battery cells 44. Specifically, as depicted in FIG. 11, the integrated bus bar and voltage sense subassembly 180 and the prismatic battery cells 44 may be placed in the housing 40 in a nested arrangement, and the carrier 188 may include features that enable the carrier 188 to be secured to the housing 40 while urging the cells 44 in a rearward direction 192 from the front portion 56 to the back portion 58. While this may impart some compressive force onto the cells 44, this does not compress the cells 44 at their active areas 120, for example such that opposing normal forces are placed onto the faces 76, 78. In this regard, the carrier 188 does not necessarily prevent swelling of the cells 44 when the cell chemistry is subject to swelling (e.g., cells with graphite anode active material). Rather, it provides contact for electrical transmissions between the carrier 188 and cells 44. It also facilitates heat transfer. For example, in FIG. 12, it can be seen that the carrier 188 presses the prismatic battery cells 44 in the rearward direction 192 from the front portion 56 to the back portion 58 and into, for example, the thermal gap pads 162, 164. Thus, the carrier 188 may place (e.g., maintain) a compressive force on the prismatic battery cells 44 along their lengths (CL).

While the present embodiments enable the cells 44 to be placed into the housing 40 in a floating arrangement with an air gap between the faces 76, 78 of the cells (e.g., as shown in FIG. 9), it should be noted that the lithium ion battery module 28 may, in other embodiments, use one or more layers 194 placed between the faces 76, 78. The layers 194 may be, for example, structural support layers (e.g., padding layers to cushion the cells 44), thermal interface layers (e.g., to transfer thermal energy between the cells 44 and other portions of the housing 40, or with each other), electrically insulative layers, adhesion layers, and so forth. In certain embodiments, the layers 194 may be used as spacers. As an example, the layers 194 may be used for electrical isolation between the cells 44. As another example, the layers 194 may be used to shim a position (e.g., a vertical position) of the cells 44 within the housing 40. For example, a vertical position of the cells 44 may be shimmed to facilitate alignment of the cell terminals 64, 66 with the carrier 188. Additionally or alternatively, the vertical position of the cells 44 may be shimmed so that each slot (e.g., discontinuous slot) is completely filled (e.g., with one of the cells 44 and one or more of the layers 194).

While certain advantages may be obtained when using the free-floating battery cell assemblies described herein, the present disclosure is not necessarily limited to such configurations. Indeed, the housing 40 may include fully continuous slots, or no slots, in addition or as an alternative to the discontinuous slots 156 described above. Indeed, the description set forth above may also apply to the use of fully continuous slots or no slots in the housing 40, as appropriate. In such embodiments, various practical results may still be realized when using prismatic battery cells 44 that do not swell by more than a particular amount, as described herein.

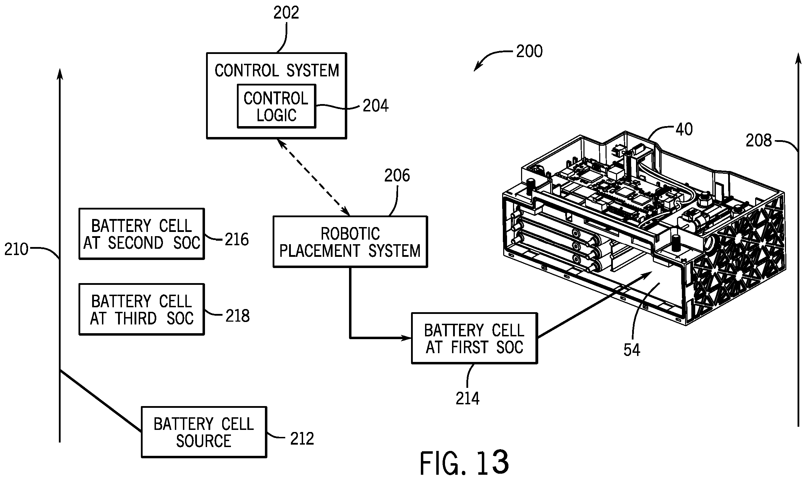

For instance, certain embodiments of the present disclosure also relate to manufacturing processes and systems that may or may not be automated to produce the battery modules 28 (e.g., to place the prismatic battery cells 44 into the housing 40). While the embodiment illustrated in FIG. 13 is depicted as forming a free floating assembly, it is intended to represent other types of configurations that do not necessarily incorporate a free floating cell arrangement. In accordance with the use of substantially non-swelling NMC/LTO battery cells as described herein (e.g., cells that swell by no more than 20%, such as less than 20%, less than 15%, less than 10%, less than 5% in any direction, or between 10% and 0.1% in any direction), an automated manufacturing system may not need to account for differences in size differences (for example differences in cell thickness) when choosing or otherwise selecting a particular prismatic battery cell 44 to place within the housing 40 of the battery module 28.

In traditional manufacturing systems, a set of prismatic battery cells 44, while being subject to the same manufacturing specifications, may vary within those specifications across one or more tolerance ranges. For example, the cell thickness (CT), cell length (CL), cell width (CW), or any combination thereof, may vary between the prismatic battery cells 44. In traditional battery cells, this variation may result from, for example, differential states of charge, where a first relatively discharged (relatively low SOC) battery cell may have a first size (e.g., relatively small in the size tolerance range) and a second relatively charged battery cell (relatively high SOC) may have a second size different from the first due to lithium intercalation into the anode. In traditional battery modules, a module housing may not be able to fit a set of swollen (e.g., high SOC) cells because they are all on a larger end of a manufacturing size tolerance. On the other hand, a set of relatively low SOC battery cells may not fill the housing to a sufficient extent, which can cause instability in the module. In reality, a set of battery cells may include a mixture of low SOC battery cells and high SOC battery cells, meaning that, for traditional battery cells, the battery cells vary within the manufacturing tolerance by different degrees. To ensure a proper fit, traditional manufacturing systems may determine the size, degree of variation, SOC, or any combination thereof, for each battery cell to determine whether the battery cell is an appropriate fit within a particular housing. Such processes may generally be referred to as "cell grading" processes.

It is now recognized that such grading process may be reduced or eliminated in accordance with certain aspects of the present disclosure, because the NMC/LTO prismatic battery cells 44 do not swell, or only swell by no more than a relatively small percentage (e.g., by no more than 5%). For example, the prismatic battery cells 44 may have a defined dimension (e.g., cell thickness CT), and a defined tolerance range for the CT to allow for some degree of manufacturing variability (e.g., resulting from swelling). For example, a particular standard may allow for a 5% variation in the CT, meaning that the group of prismatic battery cells 44 may have thicknesses ranging from 5% below the defined CT to 5% above the defined CT. Again, the use of 5% is an example.

It is now recognized that not having to account for differences in battery cell size variations resulting from manufacturing variability (e.g., due to swelling) may increase the speed of manufacturing processes, and may also reduce capital costs associated with implementing manufacturing systems. One example of such a manufacturing system 200 (e.g., a pick and place system) is shown schematically in FIG. 13. Specifically, in the illustrated embodiment of the manufacturing system 200, a control system 202 with control logic 204 (e.g., including one or more processors and one or more memory units, one or more ASICs, one or more FPGAs, one or more general purpose processors, or any combination thereof) may be programmed with instructions configured to cause a robotic placement system 206 (e.g., a cell positioning system) to pick (e.g., engage using a capture mechanism) prismatic battery cells and place them in the housing 40 without performing a cell grading process (e.g., without determining a size variability within the manufacturing tolerance of standardized dimensions for NMC/LTO prismatic battery cells). In doing so, the capture mechanism may engage the prismatic battery cell 44 and remove it from an assembled group of the battery cells 44, and this may be done without a cell grading process. In other words, the control system 202 may have control logic 204 that does not determine a size of the prismatic battery cells 44 when engaged with a clamping mechanism (e.g., of the robotic placement system 206). Such cell grading processes may be avoided because it may be assumed that the substantially non-swellable battery cells 44 all have substantially the same size.

The manufacturing system 200 may include an assembly path 208 configured to convey module housings 40, and to position the housings 40 in a location of the system 200 where the robotic placement system 206 inserts the prismatic battery cells 44 into their respective cell receptacle areas 54. The assembly path 208 may include various features configured to move all or a portion of a plurality of battery module housings 40 along a path where the housings 40 are operated upon to incorporate additional components. For example, the assembly path 208 may include various motors, conveyors, sensors, and the like. The sensors may, for example, be used by the control system 202 to determine when the housings 40 are appropriately positioned relative to the robotic placement system 206 so that the control system 202 may instruct the robotic placement system 206 to begin picking and placing the prismatic battery cells 44 into the housing 40.

The manufacturing system 200 also includes a cell feed path 210, which conveys prismatic battery cells 44 from a battery cell source 212 to a location proximate the robotic placement system 206. The battery cell source 212 may represent, for example, a collection (group) of prismatic battery cells all conforming to a set of manufacturing specifications. That is, each prismatic battery cell 44 may have dimensions within manufacturing tolerances of prismatic battery cell dimensions. In accordance with the present disclosure, the cells all conform to the set of manufacturing specifications by having the same cell chemistry (e.g., the same anode and cathode chemistry, size, shape, and so forth, the same electrolyte and additives), and the same defined dimensions for manufacture (i.e., the same set of standardized dimensions), where the actual dimensions of the conforming cells are within a manufacturing tolerance of the defined dimensions.

As an illustrative example, referring to the prismatic battery cell 44 illustrated in FIG. 6, the cell 44 may have a defined value of, for example, 14 mm for the cell thickness CT, and the tolerance of the thickness may be, for example, 0.50 mm, to account for manufacturing variability (e.g., due to different SOCs and associated swelling). Thus, the battery cell source 212 may have a collection of the prismatic battery cells 44 manufactured using the same specifications as the prismatic battery cell in FIG. 6, and having thicknesses varying from 13.5 mm to 14.5 mm, for example. The cell width CW and cell length CL may also have a defined manufacturing value, and a defined tolerance associated with the defined manufacturing value. In this regard, CL, CW, and CT all have defined manufacturing values and associated tolerances. The associated tolerances may range, for example, from 0.5% to 5% of the defined manufacturing value, meaning that the value of the manufactured battery cells 44 may range from between 0.5% and 5% below the defined manufacturing value to between 0.5% and 5% above the defined manufacturing value. By way of example, the tolerances may be 0.5%, 1%, 2%, 3%, 4%, or 5% of the manufacturing value. The tolerance range may depend on the expected degree of size variation resulting from the small amounts of swelling in the NMC/LTO cells. In this regard, such embodiments of the battery cells 44 may be considered to have tolerances that are much tighter than traditional groups of battery cells and, accordingly, may be considered to have substantially matching sizes (e.g., CT, CW, and CL may all be within 5% of a design value).

Returning now to the manufacturing system 200 of FIG. 13, the robotic placement system 206 is shown as placing a first prismatic battery cell 214 into the cell receptacle region 54. The first prismatic battery cell 214 may have actual dimensions (CL, CW, CT) having a first SOC and associated degree of variability within the standardized dimensions.

The robotic placement system 206 may also, upon instruction from the control system 202, pick a second prismatic battery cell 216 and place it in the housing 40 without the control system 202 performing a determination as to the degree of variability of the second prismatic battery cell 216 within the standardized dimensions. Similarly, the control system 202 may cause the robotic placement system 206 to pick a third prismatic battery cell 218 and place it in the housing 40 without the control system 202 performing a determination as to the degree of variability of the third prismatic battery cell 218 within the standardized dimensions. Although the second prismatic battery cell 216 may have a second SOC and associated degree of variability within the standardized dimensions and the third prismatic battery cell 218 may have a third SOC and associated degree of variability within the standardized dimensions, because the prismatic battery cells are NMC/LTO cells, they may not swell to an appreciable extent during operation and, accordingly, are assumed to be appropriately sized for the module 40.

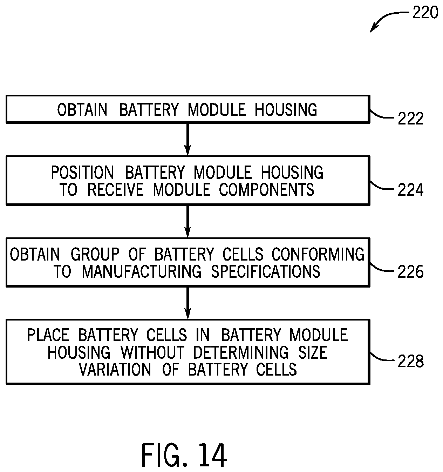

An embodiment of a method 220 of producing lithium ion battery modules using the system 200 is depicted as a process flow diagram in FIG. 14. As illustrated, the method 220 may include obtaining (block 222) the battery module housing 40. For example, obtaining the battery module housing 40 may include forming (e.g., molding) the battery module housing 40 as a one-piece or as a multi-piece structure. The housing 40 may have any configuration, as noted above, such as a "shoe box" structure that is generally hollow or includes slots or partial slots for prismatic battery cells. As one example, forming the battery module housing may include molding the battery module housing to have first and second columns of the discontinuous slots 156, as generally shown in FIG. 13.

The discontinuous slots may be formed in the molding process by, for example, molding fixed protrusions into an interior of the housing 40. In other embodiments, obtaining the battery module housing may simply correspond to purchasing the housing. In still further embodiments, the battery module housing may be formed by a process other than molding, such as machining. Further still, the housing may be produced by a combination of molding and machining.

The method 220 may also include positioning (block 224) the battery module housing 40 to receive module components (e.g., in an orientation and position where a positioning system inserts components into the housing 40), including the prismatic electrochemical cells 44. For example, as shown in FIG. 13, the assembly path 208 may position the housing 40 proximate the robotic positioning system 206.

The method 220 also includes obtaining (block 226) a group of battery cells that all conform to a set of manufacturing specifications, including a set of standardized dimensions. Again, in accordance with the present disclosure, the battery cells may be NMC/LTO cells that do not swell by more than 5% in any direction. As noted above, it is now recognized that the substantial non-swellable nature of the NMC/LTO cells means that regardless of their respective states of charge, the battery cells are each suitable to be positioned in the housing 40. Accordingly, the method 220 includes placing (block 228) the battery cells in the housing 40 (e.g., in slots, partial slots, discontinuous slots), without determining a size variation of the battery cells. Again, the elimination of this manufacturing step may speed manufacturing and reduce costs. Accordingly, the NMC/LTO prismatic battery cells may simply be picked from, for example, the cell feed path 210 and placed in the housing 40.

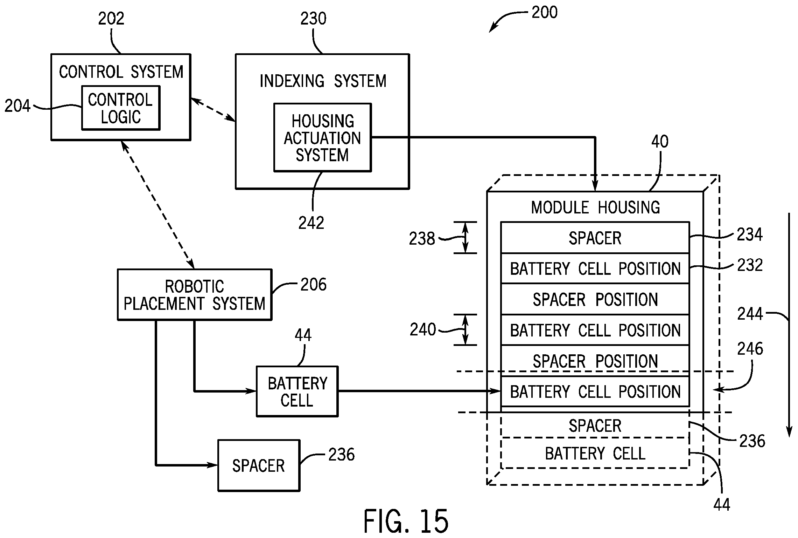

FIG. 15 depicts another embodiment of the manufacturing system 200, which may be used in combination with elements of the system 200 of FIG. 13 (e.g., control logic configured to cause pick and place battery cell placement), or instead of such elements. Specifically, the manufacturing system 200 includes the same system components as shown in FIG. 13, and also includes an indexing system 230. The indexing system 230 may include, among other things, sensors, computing equipment (e.g., memory circuitry and processing circuitry), and so forth, that enable the indexing system 230, either alone or in combination with the control system 202, to index the battery module housing 40. In indexing the battery module housing 40, the indexing system 230 may, for example, index a plurality of battery cell positions 232 of the housing 40, which correspond to positions where battery cells 44 are placed within the housing 40. The indexing system 230 may also, in some embodiments, index spacer positions 234 for spacers 236 (e.g., layers 194) that may be located between the battery cells 44. The spacers 236 may be used, for example, for electrical insulation and thermal conductance, and may include padding layers, thermal gap pads, and the like. The spacers 236 may, additionally or alternatively, be used for compression of the battery cells 44 within the housing 44. The battery cell positions 232 and the spacer positions 234 may be indexed in combination, or separately. Further, it should be noted that each illustrated box for the battery cell positions 232 and the spacer positions 234 may correspond to slots in the housing 40 configured to separate the battery cells 44 from one another or, in other embodiments, may simply correspond to a position but not a physical feature of the housing 40.

As one example, the indexing system 230 may index the spacer positions 234 to determine a distance 238 corresponding to each of the spacer positions 234, and may also index the battery positions 232 to determine a distance 240 corresponding to each of the battery positions 232. The indexing system 230 may perform such indexing to determine an extent to displace the battery module housing 40 during assembly of the module 28. These indexed distances may be stored by, for example, the control system 202 (e.g., in non-transitory machine-readable memory), and used to cause a housing actuation system 242 of the indexing system 230 to move the housing 40 by the indexed distances. By way of example, the housing actuation system 242 may include actuators such as one or more servomechanisms to move the housing 40 (and components installed in the housing 40) by the indexed distance corresponding to the spacer position 234, by the indexed distance corresponding to the battery cell position 232, or by a combination of the two indexed distances, or any combination of the indexed distances. For example, the housing actuation system 242 may actuate the module housing 40 in a direction 244 by an amount corresponding to the indexed distance, and one of the battery cell positions 232 and/or one of the spacer positions 234 may be positioned in an insertion location 246 of the indexing system. The insertion location 246 may be a location where the robotic placement system 206 repeatedly inserts one of the battery cells 44, one of the spacers 236, or a combination thereof, into the housing 40.

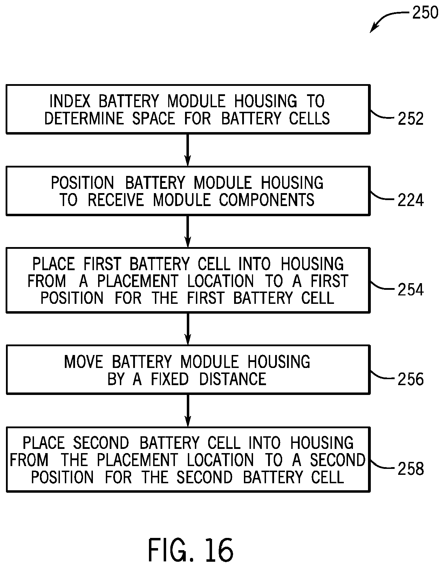

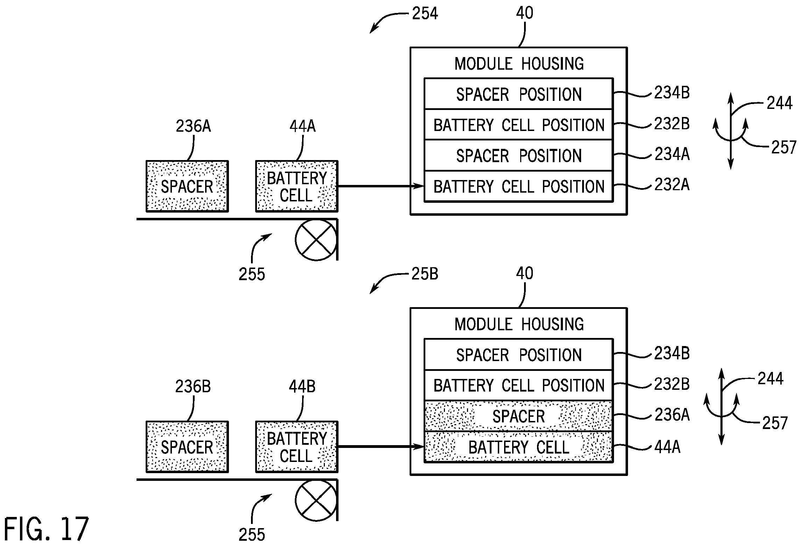

In accordance with the present disclosure, the embodiments relating to indexing of the housing 40 may be used as an alternative to, or in combination with, the embodiments relating to pick and place insertion of the battery cells 44 into the housing 40. In this regard, the present disclosure also provides a method 250, an embodiment of which is depicted in FIG. 16, for manufacturing lithium ion battery modules in accordance with the indexing approach described above. To help illustrate aspects of the method 250, the method 250 will be described in combination with the illustration of FIG. 17, which depicts various steps in the indexing process.

As illustrated in FIG. 16, the method 250 may include indexing (block 252) the housing 40, for example to determine a space, distance, or another appropriate measurement for a location in the housing 40 corresponding to where battery cells 44 are to be inserted. Indexing in accordance with block 252 may include, for example, performing automated measurements (e.g., with the indexing system 242). In other embodiments, measurements may be provided to the indexing system 242 and/or the control system 202, and the indexing system 242 and/or the control system 202 may associate the entered measurements with appropriate features of the housing 40 (e.g., the distances 238, 240).

To prepare the housing 40 for battery cell 44 insertions, the method 250 also includes positioning (block 224) the battery module housing 40 to receive certain components, as described above with respect to FIG. 14. In certain embodiments, the indexing system may be involved in the positioning of the housing 40 (e.g., using the housing actuation system).

Once the housing 40 is appropriately positioned, a first of the battery cells 44 from a group (e.g., from the cell source 212 of FIG. 14) may be placed (block 254) into a battery cell position of the housing 40, for example at a particular cell insertion location of the robotic placement system 206. The corresponding location for the first battery cell may be referred to as a first position within the housing. The method 250 may also include, either separately or in combination with insertion of the first battery cell, an insertion of a spacer into the housing 40 in a corresponding location for the spacer (e.g., a first spacer position for a first spacer). For example, as shown in FIG. 17, the module housing 40 may have a first battery cell position 232A for a first battery cell 44A, a first spacer position 234A for a first spacer 236A, and so forth. The method 250, in accordance with block 254, may cause a placement system (e.g., robotic placement system 206 of FIG. 14) or a conveyance system 255 (e.g., including a conveyor belt or the like), or both, to direct the first battery cell 44A into the first battery cell position 232A of the housing 40. In certain embodiments, the first spacer 236A may also be directed into the first spacer position 234A, either at the same time or after placing the first battery cell 44A into the first battery cell position 232A, followed by an actuation along a fixed distance corresponding to a space size of the first battery cell position 232A and/or the first spacer position 234A.

In this regard, returning to FIG. 16, once the first battery cell (and any associated spacers) is positioned in the housing 40, the method 250 includes moving (block 256) the housing 40 by a fixed distance to position the housing 40 so that additional components (e.g., battery cells, spacers) can be inserted therein. For example, the distance that the housing 40 is moved may correspond to any one or a combination of the indexed distances determined in accordance with block 252. Again, the movement may be performed by, for example, a housing actuation system (e.g., one or more servomechanisms). Furthermore, it should be noted that more complex movements are also encompassed by the present disclosure. For example, block 256 may alternatively include moving the housing 40 along a fixed distance in combination with one or more rotations, followed by additional movements. In such embodiments, the movements, rotations, and displacements may all be according to indexed distances and spatial relationships. For example, as shown in transitioning from the top to bottom of FIG. 17, it can be seen that the housing 40 is moved (e.g., along direction 244 and/or along a rotational trajectory 257) to where a second battery position 232B is placed generally in-line with the conveyance system 255.

Returning to FIG. 16, once the housing 40 is appropriately positioned by movement along the fixed distance (or combinations of fixed movements), the method 250 includes placing (block 258) a second battery cell into the housing 40 (e.g., proximate the first battery cell). The placement may be performed in the same manner as set forth above for block 254, as shown in FIG. 17. In FIG. 17, it can be seen that the second battery cell 44B is placed into the second battery position 232B in the housing 40 corresponding to a specified location for the second battery cell 44B. Again, this may be performed alone, or in combination with spacer placement into the housing (e.g., placement of a second spacer into a second spacer position). Further, it should be noted that in automated systems, the robotic placement system 206 may perform highly precise and repeated movements, which can be more reliable than having multiple variables associated with component placement. Thus, in such embodiments, the robotic placement system 206 may place the second battery cell into the same position it positioned the first battery cell (i.e., it uses the same movement). However, because the housing 40 has been moved in accordance with block 256, the second battery cell is placed into an appropriate location within the housing 40.

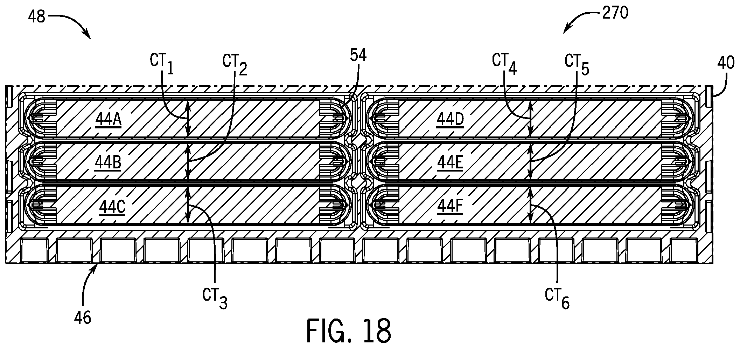

As noted above, it is now recognized that certain types of cells that do not swell by an appreciable extent (e.g., less than 5% in any direction) may afford certain benefits with respect to clamping, retaining, and manufacturing in lithium ion battery modules. Indeed, the pick and place method of manufacturing and the indexing method of manufacturing may benefit from such battery cells, and it is now recognized that certain intermediates, such as partially assembled battery modules in accordance with present techniques, may be different compared to traditional intermediates. One example is depicted in FIG. 18, which is a front view of a partially assembled lithium ion battery module 270.

Specifically, the partially assembled lithium ion battery module 270 of FIG. 17 includes a plurality of the prismatic battery cells 44 disposed within the housing 40 in respective discontinuous slots 156. In other embodiments, the prismatic battery cells 44 may be disposed in continuous slots, or may simply be in a stacked arrangement with no retention or suspending features built into the housing 40. For example, the battery cells 44 may be stacked on top of one another, with one or more spacers positioned therebetween. In accordance with the present disclosure, the battery cells 44 may be substantially non-swellable, or may not exhibit an appreciable amount of swelling. That is, the prismatic battery cells 44 may swell by no more than 5%, no more than 4%, no more than 3%, no more than 2%, no more than 1%, or no more than 0.5% in any direction, and in particular in the thickness direction (i.e., along CT). In one embodiment, the prismatic battery cells 44 all include NMC as the cathode active material, and LTO as the anode active material. Thus, they are all NMC/LTO prismatic battery cells.

Unlike traditional intermediates, the battery cells 44 in FIG. 18 have different states of charge (SOC) that would otherwise preclude them from being incorporated into a partially assembled battery module. As an example, all components that will be positioned into the cell receptacle region 54, including any potential clamping features, any potential spacers, and any potential battery cells, are all present. In other words, the cell receptacle region 54 is fully filled.. Unlike housings that include multiple pieces and are bolted together, or housings that have built-in cranking mechanisms, in accordance with one aspect of the present disclosure and as illustrated, the housing 40 is fully formed and is a one-piece structure, but does not include any built-in clamping features that place a clamping force on the battery cells 44, specifically on the active area 120 of the cells 44 (e.g., on their faces 76, 78). Indeed, the battery cells 44 are all in an uncompressed state, and may also be unrestrained in a floating arrangement.

More specifically, the states of charge of the prismatic battery cells 44 in FIG. 18 may all be relatively high, may all be relatively low, or may be a mixture of different states of charge that would otherwise cause traditional battery cells to swell and not be used in particular combinations for a variety of reasons. By way of example, the plurality of battery cells 44 may include a first prismatic NMC/LTO battery cell 44A, a second prismatic NMC/LTO battery cell 44B, a third prismatic NMC/LTO battery cell 44C, a fourth prismatic NMC/LTO battery cell 44D, a fifth prismatic NMC/LTO battery cell 44E, and a sixth prismatic NMC/LTO battery cell 44F, each having a respective cell thickness CT₁ - CT₆, and each having a respective state of charge. In traditional configurations, if the state of charge of the cells 44 varied across the plurality by more than, for example, 30%, then CT₁ - CT₆ would vary by a corresponding amount, for example an amount proportional to the state of charge due to swelling. However, in accordance with the present disclosure, CT₁ - CT₆ may vary by no more than 5%, because the state of charge has little to no effect on their respective thicknesses. Indeed, the state of charge for the plurality of the battery cells 44A-44F may vary by between 25% and 60%, but CT₁ - CT₆ do not vary by more than 5%, by more than 4%, by more than 3%, by more than 2%, by more than 1%, or by more than 0.5%. In other words, the NMC/LTO cells may have widely varying states of charge, but will not generally have varying cell thickness.

It should be appreciated that there may be a different number of such cells in other instantiations, such as in the other embodiments shown in FIG. 3. Further, it should be noted that the partially assembled battery module 270 may not include features that would otherwise serve to balance the state of charge of the plurality of battery cells. For example, the partially assembled battery module 270 may not include electrical components electrically connecting the battery cells 44 to one another, or a battery control module or similar regulation and control circuitry that would otherwise serve to balance charge across the plurality of the battery cells 44.

One or more of the disclosed embodiments, alone or on combination, may provide one or more technical effects including the use of substantially non-swelling battery cells in an unclamped, uncompressed arrangement, as well as battery cells having a specific size, shape, volume, and energy density (e.g., volumetric and/or gravimetric) configured for certain applications (e.g.,. micro-hybrid applications). The use of such arrangements may result in battery modules that do not require the use of clamping mechanisms, battery cell hold down mechanisms, and the like, and accordingly have reduced weight and associated cost. Further, the use of such types of battery cells facilitates manufacturing and reduces associated costs by enabling faster manufacture and greater compatibility between battery modules by enabling a particular set of battery cells to have generally the same size and energy density with little to no variation due to manufacturing. The technical effects and technical problems in the specification are exemplary and are not limiting. It should be noted that the embodiments described in the specification may have other technical effects and can solve other technical problems.

## Claims

1. A lithium ion battery module (28), comprising:
- a plurality of prismatic lithium ion battery cells (44) disposed in a housing (40) of the lithium ion battery module (28) in adjacent columns, wherein the prismatic lithium ion battery cells (44) of the plurality of prismatic lithium ion battery cells (44) are electrically coupled to one another and to a terminal of the lithium ion battery module (28);
wherein each lithium ion battery cell (44) of the plurality of lithium ion battery cells (44) comprises:
- a prismatic cell casing (60) enclosing electrochemically active components including lithium nickel cobalt manganese oxide (NMC, LiNiₓMn_{y}Co_{z}O₂, where x+y+z=1) as cathode active material and lithium titanate (LTO) as anode active material, wherein the prismatic cell casing (60) comprises a terminal end portion (62) having cell terminals (64, 66) disposed thereon, a base portion (70) substantially opposite the terminal end portion (62), a first face (76) and a second face (78) each extending between the terminal end portion (62) and the base portion (70), and a first side (72) and a second side (74) each extending between the terminal end portion (62) and the base portion (70) and coupling the first and second faces (76, 78), and wherein the plurality of lithium ion battery cells (44) are configured such that no opposing normal forces are placed on the respective first and second faces (76, 78) of each lithium ion battery cell (44);
wherein the cell thickness (CT) of the prismatic cell casing (60) corresponds to a distance between the first and second faces (76, 78), the cell width (CW) of the prismatic cell (44) corresponds to a distance between respective outermost surfaces of the first and second sides (72, 74), and the cell length (CL) of the prismatic cell casing (60) corresponds to a distance between the terminal end portion (62) and the base portion (70);
wherein the cell thickness (CT), the cell width (CW), the cell length (CL), and the electrochemically active components are such that the lithium ion battery cell (44) has a volumetric energy density between 67 Watt-hours per Liter, Wh/L, and 251 Wh/L, and has a nominal voltage between 2.0 V and 4.2 V,
wherein the housing (40) of the lithium ion battery module (28) comprises a base (46) having dimensions constituting a base length (L) and a base width (W), wherein the base length (L) of the housing (40) is between 150 mm and 450 mm and the base width (W) of the housing (40) is between 100 mm and 200 mm,
wherein the cell thickness (CT) of each prismatic cell casing (60) is between 13 mm and 15 mm,
wherein the cell length (CL) of each prismatic cell casing (60) is between 138 mm and 142 mm,
wherein the cell width (CW) of each prismatic cell casing (60) is between 109 mm and 114 mm, and
wherein a volume of each prismatic casing (60) is between 0.2 L and 0.24 L.

2. The lithium ion battery cell module (28) of claim 1,
wherein the volumetric energy density of each lithium ion battery cell (44) is between 73 Wh/L and 230 Wh/L, and each lithium ion battery cell (44) has a capacity between 8 Ah and 12 Ah.

3. The lithium ion battery cell module (28) of claim 1,
wherein the volumetric energy density of each lithium ion battery cell (44) is between 80 Wh/L and 251 Wh/L, and each lithium ion battery cell (44) has a capacity between 8 Ah and 12 Ah.

4. The lithium ion battery module (28) of claim 1,
wherein the volumetric energy density of each lithium ion battery cell (44) is between 77 Wh/L and 138 at a nominal voltage of 2.3 V, and each lithium ion battery cell (44) has a capacity between 8 Ah and 12 Ah.

5. The lithium ion battery module (28) of claim 1,
wherein the cell thickness (CT) of each prismatic casing (60) is 14 mm, the cell length (CL) of each prismatic casing (60) is 140 mm, and the cell width (CW) of each prismatic casing (60) is 112 mm, and the volumetric energy density of each lithium ion battery cell (44) is between 77 Wh/L and 137 Wh/L, the nominal voltage of each lithium ion battery cell (44) is between 2.1 V and 2.5 V, and each lithium ion battery cell (44) has a capacity between 8 Ah and 12 Ah.

6. The lithium ion battery module (28) of one of claims 1 to 5,
wherein the weight of each lithium ion battery cell (44) is between 400 g and 500 g, and each lithium ion battery cell (44) has a gravimetric energy density between 32 Watt-hours per kilogram (Wh/kg) and 126 Wh/kg, and each lithium ion battery cell (44) has a capacity between 8 Ah and 12 Ah.

7. The lithium ion battery module (28) of claim 6,
wherein the weight of each lithium ion battery cell (44) is between 440 g and 470 g.

8. The lithium ion battery module (28) of claim 6,
wherein the gravimetric energy density of each lithium ion battery cell (44) is between 44 Wh/kg and 93 Wh/kg.

9. The lithium ion battery module (28) of one of claims 1 to 5,
wherein the weight of each lithium ion battery cell (44) is 420 g, the gravimetric energy density of each lithium ion battery cell (44) is between 48 Wh/kg and 71 Wh/kg, and the nominal voltage of each lithium ion battery cell (44) is between 2.0 V and 3.0 V.

10. The lithium ion battery module (28) of claim 9,
wherein the gravimetric energy density of each lithium ion battery cell (44) is 55 Wh/kg at a nominal voltage of 2.3 V, and each lithium ion battery cell (44) has a capacity of 10 Ah.

11. The lithium ion battery module (28) of one of claims 1 to 5,
wherein the weight of each lithium ion battery cell (44) is 450 g, the gravimetric energy density of each lithium ion battery cell (44) is between 44 Wh/kg and 67 Wh/kg, and the nominal voltage of each lithium ion battery cell (44) is between 2.0 V and 3.0 V, wherein the gravimetric energy density each lithium ion battery cell (44) is preferably 51 Wh/kg at a nominal voltage of 2.3 V.

## Patentansprüche

1. Lithium-Ionen-Batterienmodul (28), umfassend:
- eine Vielzahl prismatischer Lithium-Ionen-Batteriezellen (44), die in einem Gehäuse (40) des Lithium-Ionen-Batterienmoduls (28) in angrenzenden Säulen angeordnet sind, wobei die prismatischen Lithium-Ionen-Batteriezellen (44) der Vielzahl prismatischer Lithium-Ionen-Batteriezellen (44) elektrisch miteinander und mit einem Anschluss des Lithium-Ionen-Batterienmoduls (28) gekoppelt sind;
wobei jede Lithium-Ionen-Batteriezelle (44) der Vielzahl von Lithium-Ionen-Batteriezellen (44) umfasst:
- ein prismatisches Zellengehäuse (60), das elektrochemisch aktive Komponenten enthält, einschließlich Lithium-Nickel-Kobalt-Mangan-Oxid (NMC, LiNiₓMn_{y}Co₂O₂, wobei x+y+z=1) als kathodenaktives Material und Lithiumtitanat (LTO) als anodenaktives Material, wobei das prismatische Zellengehäuse (60) einen Endabschnitt (62) mit darauf angeordneten Zellanschlüssen (64, 66), einen im Wesentlichen gegenüber dem Endabschnitt (62) liegenden Basisabschnitt (70), eine sich jeweils zwischen dem Endabschnitt (62) und dem Basisabschnitt (70) erstreckende erste Fläche (76) und zweite Fläche (78) und eine sich jeweils zwischen dem Endabschnitt (62) und dem Basisabschnitt (70) erstreckende und die erste und zweite Fläche (76, 78) koppelnde erste Seite (72) und zweite Seite (74) umfasst, und wobei die Vielzahl von Lithium-Ionen-Batteriezellen (44) so ausgelegt sind, dass keine entgegengesetzten Normalkräfte auf die jeweilige erste und zweite Fläche (76, 78) jeder Lithium-Ionen-Batteriezelle (44) aufgebracht werden;
wobei die Zellendicke (CT) des prismatischen Zellengehäuses (60) einem Abstand zwischen der ersten und zweiten Fläche (76, 78) entspricht, die Zellenbreite (CW) der prismatischen Zelle (44) einem Abstand zwischen den jeweiligen äußersten Flächen der ersten und zweiten Seite (72, 74) entspricht und die Zellenlänge (CL) des prismatischen Zellengehäuses (60) einem Abstand zwischen dem Endabschnitt (62) und dem Basisabschnitt (70) entspricht;
wobei die Zellendicke (CT), die Zellenbreite (CW), die Zellenlänge (CL) und die elektrochemisch aktiven Komponenten so beschaffen sind, dass die Lithium-Ionen-Batteriezelle (44) eine volumetrische Energiedichte zwischen 67 Wattstunden pro Liter, Wh/l, und 251 Wh/l aufweist und eine Nennspannung zwischen 2,0 V und 4,2 V aufweist,
wobei das Gehäuse (40) des Lithium-Ionen-Batterienmoduls (28) eine Basis (46) mit Abmessungen aufweist, die eine Basislänge (L) und eine Basisbreite (W) aufweisen, wobei die Basislänge (L) des Gehäuses (40) zwischen 150 mm und 450 mm und die Basisbreite (W) des Gehäuses (40) zwischen 100 mm und 200 mm beträgt,
wobei die Zellendicke (CT) jedes prismatischen Zellengehäuses (60) zwischen 13 mm und 15 mm beträgt,
wobei die Zellenlänge (CL) jedes prismatischen Zellengehäuses (60) zwischen 138 mm und 142 mm beträgt,
wobei die Zellenbreite (CW) jedes prismatischen Zellengehäuses (60) zwischen 109 mm und 114 mm beträgt, und
wobei ein Volumen jedes prismatischen Gehäuses (60) zwischen 0,2 l und 0,24 l beträgt.

2. Lithium-Ionen-Batteriezellenmodul (28) gemäß Anspruch 1,
wobei die volumetrische Energiedichte jeder Lithium-Ionen-Batteriezelle (44) zwischen 73 Wh/l und 230 Wh/l beträgt und jede Lithium-Ionen-Batteriezelle (44) eine Kapazität zwischen 8 Ah und 12 Ah aufweist.

3. Lithium-Ionen-Batteriezellenmodul (28) gemäß Anspruch 1,
wobei die volumetrische Energiedichte jeder Lithium-Ionen-Batteriezelle (44) zwischen 80 Wh/l und 251 Wh/l beträgt und jede Lithium-Ionen-Batteriezelle (44) eine Kapazität zwischen 8 Ah und 12 Ah aufweist.

4. Lithium-Ionen-Batterienmodul (28) gemäß Anspruch 1,
wobei die volumetrische Energiedichte jeder Lithium-Ionen-Batteriezelle (44) zwischen 77 Wh/l und 138 bei einer Nennspannung von 2,3 V beträgt und jede Lithium-Ionen-Batteriezelle (44) eine Kapazität zwischen 8 Ah und 12 Ah aufweist.

5. Lithium-Ionen-Batterienmodul (28) gemäß Anspruch 1,
wobei die Zellendicke (CT) jedes prismatischen Gehäuses (60) 14 mm beträgt, die Zellenlänge (CL) jedes prismatischen Gehäuses (60) 140 mm und die Zellenbreite (CW) jedes prismatischen Gehäuses (60) 112 mm beträgt und die volumetrische Energiedichte jeder Lithium-Ionen-Batteriezelle (44) zwischen 77 Wh/l und 137 Wh/l beträgt, die Nennspannung jeder Lithium-Ionen-Batteriezelle (44) zwischen 2,1 V und 2,5 V beträgt und jede Lithium-Ionen-Batteriezelle (44) eine Kapazität zwischen 8 Ah und 12 Ah aufweist.

6. Lithium-Ionen-Batterienmodul (28) gemäß einem der Ansprüche 1 bis 5,
wobei das Gewicht jeder Lithium-Ionen-Batteriezelle (44) zwischen 400 g und 500 g beträgt und jede Lithium-Ionen-Batteriezelle (44) eine gravimetrische Energiedichte zwischen 32 Wattstunden pro Kilogramm (Wh/kg) und 126 Wh/kg aufweist und jede Lithium-Ionen-Batteriezelle (44) eine Kapazität zwischen 8 Ah und 12 Ah aufweist.

7. Lithium-Ionen-Batterienmodul (28) gemäß Anspruch 6,
wobei das Gewicht jeder Lithium-Ionen-Batteriezelle (44) zwischen 440 g und 470 g beträgt.

8. Lithium-Ionen-Batterienmodul (28) gemäß Anspruch 6,
wobei die gravimetrische Energiedichte jeder Lithium-Ionen-Batteriezelle (44) zwischen 44 Wh/kg und 93 Wh/kg beträgt.

9. Lithium-Ionen-Batterienmodul (28) gemäß einem der Ansprüche 1 bis 5,
wobei das Gewicht jeder Lithium-Ionen-Batteriezelle (44) 420 g beträgt, die gravimetrische Energiedichte jeder Lithium-Ionen-Batteriezelle (44) zwischen 48 Wh/kg und 71 Wh/kg beträgt und die Nennspannung jeder Lithium-Ionen-Batteriezelle (44) zwischen 2,0 V und 3,0 V liegt.

10. Lithium-Ionen-Batterienmodul (28) gemäß Anspruch 9,
wobei die gravimetrische Energiedichte jeder Lithium-Ionen-Batteriezelle (44) 55 Wh/kg bei einer Nennspannung von 2,3 V beträgt und jede Lithium-Ionen-Batteriezelle (44) eine Kapazität von 10 Ah aufweist.

11. Lithium-Ionen-Batterienmodul (28) gemäß einem der Ansprüche 1 bis 5,
wobei das Gewicht jeder Lithium-Ionen-Batteriezelle (44) 450 g beträgt, die gravimetrische Energiedichte jeder Lithium-Ionen-Batteriezelle (44) zwischen 44 Wh/kg und 67 Wh/kg beträgt und die Nennspannung jeder Lithium-Ionen-Batteriezelle (44) zwischen 2,0 V und 3,0 V beträgt, wobei die gravimetrische Energiedichte jeder Lithium-Ionen-Batteriezelle (44) vorzugsweise 51 Wh/kg bei einer Nennspannung von 2,3 V beträgt.

## Revendications

1. Module (28) de batterie au lithium-ion, comprenant :
- une pluralité d'éléments de batterie au lithium-ion prismatiques (44) disposés dans un logement (40) du module (28) de batterie au lithium-ion dans des colonnes adjacentes, les éléments de batterie au lithium-ion prismatiques (44) de la pluralité d'éléments de batterie au lithium-ion prismatiques (44) étant couplés électriquement entre eux et à une borne du module (28) de batterie au lithium-ion ;
dans lequel chaque élément de batterie au lithium-ion (44) de la pluralité d'éléments de batterie au lithium-ion (44) comprend :
- un bac (60) d'éléments prismatiques renfermant des composants électrochimiquement actifs comprenant un oxyde de lithium nickel cobalt manganèse (NMC, LiNiₓMn_{y}Co_{z}O₂, où x + y + z = 1) en tant que matériau actif de cathode et du titanate de lithium (LTO) en tant que matériau actif d'anode, le bac (60) d'éléments prismatiques comprenant une partie extrémité de borne (62) sur laquelle sont disposées des bornes (64, 66) d'éléments, une partie de base (70) sensiblement en regard de la partie extrémité de borne (62), une première face (76) et une seconde face (78) s'étendant chacune entre la partie extrémité de borne (62) et la partie de base (70), et un premier côté (72) et un second côté (74) s'étendant chacun entre la partie extrémité de borne (62) et la partie de base (70) et couplant les première et seconde faces (76, 78), et dans lequel les multiples éléments de batterie au lithium-ion (44) sont conçus de sorte qu'aucune force normale opposée ne s'exerce sur les première et seconde faces (76, 78) respectives de chaque élément de batterie au lithium-ion (44) ;
dans lequel l'épaisseur d'élément (CT) du bac (60) d'éléments prismatiques correspond à une distance entre les première et seconde faces (76, 78), la largeur d'élément (CW) de l'élément prismatique (44) correspond à une distance entre des surfaces les plus à l'extérieur respectives des premier et second côtés (72, 74), et la longueur d'élément (CL) du bac (60) d'éléments prismatiques correspond à une distance entre la partie extrémité de borne (62) et la partie de base (70) ;
dans lequel l'épaisseur d'élément (CT), la largeur d'élément (CW), la longueur d'élément (CL) et les composants électrochimiquement actifs sont tels que l'élément de batterie au lithium-ion (44) ait une densité énergétique volumétrique entre 67 watts-heures par litre, Wh/l, et 251 Wh/l, et ait une tension nominale entre 2,0 V et 4,2 V,
dans lequel le boîtier (40) du module (28) de batterie au lithium-ion comprend une base (46) ayant des dimensions constituant une longueur de base (L) et une largeur de base (W), dans lequel la longueur de base (L) du logement (40) est entre 150 mm et 450 mm et la largeur de base (W) du logement (40) est entre 100 mm et 200 mm,
dans lequel l'épaisseur d'élément (CT) de chaque bac (60) d'éléments prismatiques est entre 13 mm et 15 mm,
dans lequel la longueur d'élément (CL) de chaque bac (60) d'éléments prismatiques est entre 138 mm et 142 mm,
dans lequel la largeur d'élément (CW) de chaque bac (60) d'éléments prismatiques est entre 109 mm et 114 mm, et
dans lequel un volume de chaque bac prismatique (60) est entre 0,2 l et 0,24 l.

2. Module (28) d'éléments de batterie au lithium-ion selon la revendication 1,
dans lequel la densité volumétrique énergétique de chaque élément de batterie au lithium-ion (44) est entre 73 Wh/l et 230 Wh/l, et chaque élément de batterie au lithium-ion (44) a une capacité entre 8 Ah et 12 Ah.

3. Module (28) d'éléments de batterie au lithium-ion selon la revendication 1,
dans lequel la densité énergétique volumétrique de chaque élément de batterie au lithium-ion (44) est entre 80 Wh/l et 251 Wh/l, et chaque élément de batterie au lithium-ion (44) a une capacité entre 8 Ah et 12 Ah.

4. Module (28) de batterie au lithium-ion selon la revendication 1,
dans lequel la densité énergétique volumétrique de chaque élément de batterie au lithium-ion (44) est entre 77 Wh/l et 138 à une tension nominale de 2,3 V, et chaque élément de batterie au lithium-ion (44) a une capacité entre 8 Ah et 12 Ah.

5. Module (28) de batterie au lithium-ion selon la revendication 1,
dans lequel l'épaisseur d'élément (CT) de chaque bac prismatique (60) est de 14 mm, la longueur d'élément (CL) de chaque bac prismatique (60) est de 140 mm, et la largeur d'élément (CW) de chaque bac prismatique (60) est de 112 mm, et la densité énergétique volumétrique de chaque élément de batterie au lithium-ion (44) est entre 77 Wh/l et 137 Wh/l, la tension nominale de chaque élément de batterie au lithium-ion (44) est entre 2,1 V et 2,5 V, et chaque élément de batterie au lithium-ion (44) a une capacité entre 8 Ah et 12 Ah.

6. Module (28) de batterie au lithium-ion selon l'une des revendications 1 à 5,
dans lequel le poids de chaque élément de batterie au lithium-ion (44) est entre 400 g et 500 g, et chaque élément de batterie au lithium-ion (44) a une densité énergétique gravimétrique entre 32 watts-heures par kilogramme (Wh/kg) et 126 Wh/kg, et chaque élément de batterie au lithium-ion (44) a une capacité entre 8 Ah et 12 Ah.

7. Module (28) de batterie au lithium-ion selon la revendication 6,
dans lequel le poids de chaque élément de batterie au lithium-ion (44) est entre 440 g et 470 g.

8. Module (28) de batterie au lithium-ion selon la revendication 6,
dans lequel la densité énergétique gravimétrique de chaque élément de batterie au lithium-ion (44) est entre 44 Wh/kg et 93 Wh/kg.

9. Module (28) de batterie au lithium-ion selon l'une des revendications 1 à 5,
dans lequel le poids de chaque élément de batterie au lithium-ion (44) est de 420 g, la densité énergétique gravimétrique de chaque élément de batterie au lithium-ion (44) est entre 48 Wh/kg et 71 Wh/kg, et la tension nominale de chaque élément de batterie au lithium-ion (44) est entre 2,0 V et 3,0 V.

10. Module (28) de batterie au lithium-ion selon la revendication 9,
dans lequel la densité énergétique gravimétrique de chaque élément de batterie au lithium-ion (44) est de 55 Wh/kg à une tension nominale de 2,3 V, et chaque élément de batterie au lithium-ion (44) a une capacité de 10 Ah.

11. Module (28) de batterie au lithium-ion selon l'une des revendications 1 à 5,
dans lequel le poids de chaque élément de batterie au lithium-ion (44) est de 450 g, la densité énergétique gravimétrique de chaque élément de batterie au lithium-ion (44) est entre 44 Wh/kg et 67 Wh/kg, et la tension nominale de chaque élément de batterie au lithium-ion (44) est entre 2,0 V et 3,0 V, dans lequel la densité énergétique gravimétrique de chaque élément de batterie au lithium-ion (44) est de préférence de 51 Wh/kg à une tension nominale de 2,3 V.
